(19) Europäisches Patentamt / European Patent Office / Office européen des brevets

(11) EP 4 723 202 A1

(12) **EUROPEAN PATENT APPLICATION**
published in accordance with Art. 153(4) EPC

(43) Date of publication:
**08.04.2026 Bulletin 2026/15**

(21) Application number: **23939190.7**

(22) Date of filing: **15.09.2023**

(51) International Patent Classification (IPC):
***H01M 4/134*** *(2010.01)* ***H01M 4/131*** *(2010.01)*
***H01M 10/0525*** *(2010.01)*

(52) Cooperative Patent Classification (CPC):
Y02E 60/10

(86) International application number:
**PCT/CN2023/119077**

(87) International publication number:
**WO 2024/244215 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.06.2023 CN 202310639708**

(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **JIN, Haizu**
  **Ningde, Fujian 352100 (CN)**
- **CHEN, Ning**
  **Ningde, Fujian 352100 (CN)**
- **SHI, Dongyang**
  **Ningde, Fujian 352100 (CN)**
- **LIU, Zhi**
  **Ningde, Fujian 352100 (CN)**
- **DENG, Yaqian**
  **Ningde, Fujian 352100 (CN)**
- **CHENG, Zhipeng**
  **Ningde, Fujian 352100 (CN)**
- **LI, Baiqing**
  **Ningde, Fujian 352100 (CN)**

(74) Representative: **Kraus & Lederer PartGmbB**
**Thomas-Wimmer-Ring 15**
**80539 München (DE)**

(54) **SECONDARY BATTERY AND MANUFACTURING METHOD THEREFOR, AND ELECTRIC DEVICE**

(57) A secondary battery (5) and a manufacturing method therefor, and an electric device (6). The secondary battery (5) comprises a positive electrode sheet and a negative electrode sheet. The negative electrode sheet comprises a negative electrode active material layer. The negative electrode active material layer comprises a negative electrode active substance. The negative electrode active substance comprises a silicon-based material. In the same charging and discharging cycle process, the volume ratio of the negative electrode sheet during charging and discharging of the secondary battery (5) is R, wherein R is less than or equal to 1.5; and the volume ratio of the positive electrode sheet during charging and discharging of the secondary battery (5) is Y, wherein Y is less than or equal to 0.98.

5

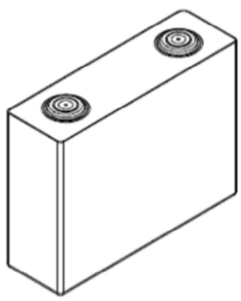

FIG. 1

EP 4 723 202 A1

## Description

### RELATED APPLICATION

The present application claims priority to Chinese Patent Application No. CN2023106397080 filed on 01 June 2023 and titled "SECONDARY BATTERY AND MANUFACTURING METHOD THEREFOR, AND ELECTRICAL APPARATUS," which is incorporated herein by reference in its entirety.

### TECHNICAL FIELD

The present application relates to the technical field of secondary batteries, and in particular, to a secondary battery and a manufacturing method therefor, and an electrical apparatus.

### BACKGROUND

The statement here merely provides background information related to the present application, and does not necessarily constitute the prior art.

With the development of various electronic products such as smart phones, tablets, smart wearables, electric tools and electric vehicles, the requirements for the performance of secondary batteries have become increasingly higher. The silicon-based material has such advantages as low costs and high specific capacity, and therefore is a highly favored negative electrode material. However, silicon-based negative electrodes suffer from severe volume expansion, making them an expandable negative electrode material that can lead to significant deterioration in battery cycling performance and severely impact battery life.

### SUMMARY OF THE INVENTION

In view of the aforementioned problems, the present application provides a secondary battery and a manufacturing method therefor, and an electrical apparatus. The secondary battery comprises an expandable negative electrode plate, which has reduced volume expansion of the negative electrode plate and volume expansion of the battery cell, thus suppressing the damage to the battery cycle life caused by the expansion of the negative electrode material. When the secondary battery comprises a silicon-containing negative electrode plate, it has reduced volume expansion of the negative electrode plate and volume expansion of the battery cell, thus suppressing the damage to the battery cycle life caused by silicon expansion.

In a first aspect, the present application provides a secondary battery, the secondary battery comprises a positive electrode plate and a negative electrode plate, the negative electrode plate comprises a negative electrode active material layer, and the negative electrode active material layer comprises a negative electrode active material.

In the same charging and discharging cycle process, the volume ratio of the negative electrode plate during charging and discharging of the secondary battery is denoted as R, where $R \leq 1.5$, and the volume ratio of the positive electrode plate during charging and discharging of the secondary battery is denoted as Y, where $Y \leq 0.98$.

When the secondary battery is charged and discharged, the electrode plate may shrink or expand due to factors such as the intercalation and deintercalation behavior of active ions and changes in grain spacing. When the secondary battery is charged, active ions are intercalated into the negative electrode plate, causing the electrode plate to expand, while active ions are deintercalated from the positive electrode plate, causing the electrode plate to shrink. When the secondary battery is discharged, active ions are deintercalated from the negative electrode plate, causing the electrode plate to shrink back, while active ions are reversibly intercalated into the positive electrode plate, causing the electrode plate volume to increase again. In the same charging and discharging cycle process, the volume ratio R of the negative electrode plate during charging and discharging of the secondary battery can reflect the degree of reversible expansion of the negative electrode plate. It is necessary to keep the R value within 150%, that is, $R \leq 1.5$. If the R value is too large, the binder may not be able to withstand the large stress in the expansion and shrinkage process. It may also cause the electrical contact of the negative electrode active material to deteriorate due to the expansion of the electrode plate volume, which may lead to the damage to the conductive network in the negative electrode plate. It may even cause the negative electrode plate structure to collapse during battery cycling, resulting in premature failure of the battery cell. In the aforementioned charging and discharging cycle process, the volume ratio Y of the positive electrode plate during charging and discharging of the secondary battery can reflect the degree of reversible shrinkage of the positive electrode plate, and a Y value not exceeding 0.98 helps to enable the battery cell to resist the expansion of the negative electrode plate as a whole. The secondary battery provided in the present application, through the shrinkage-expansion matching design of the positive electrode plate and the expandable negative electrode plate, can significantly reduce the volume expansion of the negative electrode plate, especially the reversible expansion of the negative electrode plate, can improve the stability

of the negative electrode plate and facilitate the physical bonding, electron transport, and electrolyte solution infiltration and other functions among the active materials in the negative electrode plate. It can also reduce the expansion of the battery cell, thereby suppressing the deterioration of the battery cycling performance and the battery cycle life caused by the expansion of the negative electrode material.

Based on any suitable embodiment in the present application, further, in some embodiments, the secondary battery satisfies one or more of the following features:

R is 1.1 to 1.5, optionally R is 1.1 to 1.4, and further optionally R is 1.15 to 1.4;
Y is 0.9 to 0.98, and optionally, Y is 0.95 to 0.98.

By jointly regulating R and Y, the shrinkage-expansion matching of the positive and negative electrode plates can be more precisely controlled, thereby better suppressing the deterioration of the battery cycling performance and the battery cycle life caused by the expansion of the negative electrode material.

Based on any suitable embodiment in the present application, further, in some embodiments, the negative electrode active material includes a silicon-based material.

Silicon-based materials are materials that are prone to high volume expansion in the charging and discharging cycle process and can be used as negative electrode active materials. When the negative electrode active material includes a silicon-based material and when the secondary battery is charged and discharged, the electrode plate may shrink or expand due to factors such as the intercalation and deintercalation behavior of active ions and changes in grain spacing. When the secondary battery is charged, active ions are intercalated into the negative electrode plate, causing the electrode plate to expand, while active ions are deintercalated from the positive electrode plate, causing the electrode plate to shrink. When the secondary battery is discharged, active ions are deintercalated from the negative electrode plate, causing the electrode plate to shrink back, while active ions are reversibly intercalated into the positive electrode plate, causing the electrode plate volume to increase again. In the same charging and discharging cycle process, the volume ratio R of the negative electrode plate during charging and discharging of the secondary battery can reflect the degree of reversible expansion of the negative electrode plate. It is necessary to keep the R value within 150%, that is, $R \leq 1.5$. If the R value is too large, the binder may not be able to withstand the large stress in the expansion and shrinkage process. It may also cause the electrical contact of the negative electrode active material to deteriorate due to the expansion of the electrode plate volume, which may lead to the damage to the conductive network in the negative electrode plate. It may even cause the negative electrode plate structure to collapse during battery cycling, resulting in premature failure of the battery cell. In the aforementioned charging and discharging cycle process, the volume ratio Y of the positive electrode plate during charging and discharging of the secondary battery can reflect the degree of reversible shrinkage of the positive electrode plate, and a Y value not exceeding 0.98 helps to enable the battery cell to resist the expansion of the silicon-containing negative electrode plate as a whole. The secondary battery provided in the present application, through the shrinkage-expansion matching design of the positive electrode plate and the silicon-containing negative electrode plate, can significantly reduce the volume expansion of the negative electrode plate, especially the reversible expansion of the negative electrode plate, can improve the stability of the negative electrode plate and facilitate the physical bonding, electron transport, and electrolyte solution infiltration and other functions among the active materials in the negative electrode plate. It can also reduce the expansion of the silicon-containing battery cell, thereby suppressing the deterioration of the battery cycling performance and the battery cycle life caused by silicon expansion.

Based on any suitable embodiment in the present application, further, in some embodiments, the weight percentage of the silicon-based material in the negative electrode active material is denoted as X, and the secondary battery satisfies one or more of the following features:

R is 1.1 to 1.5;
Y is 0.9 to 0.98;

$$X \geq 3\%;$$

and
$0.8 \leq R/(1.05 \cdot X+(1-X) \cdot 1.4) \leq 1.2$.

Based on any suitable embodiment in the present application, further, in some embodiments, the secondary battery satisfies one or more of the following features:

R is 1.1 to 1.4;
Y is 0.95 to 0.98;
X is 3% to 40%, optionally 3% to 28%, further optionally 5% to 25%, and even further optionally 5% to 20%; and

$$0.8 \leq R/(1.05 \cdot X+(1-X) \cdot 1.4) \leq 1.1.$$

Based on any suitable embodiment in the present application, further, in some embodiments, the secondary battery satisfies one or more of the following features:

R is 1.15 to 1.4;
X is 15%-25%; and

$$0.85 \leq R/(1.05 \cdot X+(1-X) \cdot 1.4) \leq 1.05.$$

On a substrate that coordinates and controls the shrinkage-expansion relationship between the positive electrode plate and the silicon-containing negative electrode plate, the volume ratio R of the negative electrode plate during charging and discharging of the secondary battery can be further controlled within a certain range. This is more conducive to controlling the expansion of the negative electrode plate within a certain range, thereby improving the stability of the negative electrode plate, reducing battery cell expansion, and reducing the adverse effects of volume expansion in the silicon-containing negative electrode system on the battery cycling performance and the battery cycle life.

On a substrate that coordinates and controls the shrinkage-expansion relationship between the positive electrode plate and the silicon-containing negative electrode plate, the volume ratio Y of the positive electrode plate during charging and discharging of the secondary battery can be further controlled within a certain range, which is more conducive to suppressing the expansion of the battery cell as a whole, improving the battery cycling performance, and extending the battery cycle life. Furthermore, by jointly regulating R and Y, the shrinkage-expansion matching of the positive electrode plate and the silicon-containing negative electrode plate can be more precisely controlled, thereby better suppressing the deterioration of the battery cycling performance and the battery cycle life caused by silicon expansion.

Silicon has a capacity about 10 times higher than graphite. Therefore, increasing the silicon content in the negative electrode plate is conducive to achieving higher energy density. However, silicon-containing negative electrodes expand significantly during charging, which can reduce the stability of the negative electrode plate and lead to larger battery cell expansion. This is not conducive to the battery cycling performance and can affect the battery life. By controlling the weight percentage X of silicon-based materials in the negative electrode active material (also known as silicon content) within a certain range, it helps to better suppress the expansion of the negative electrode plate and the battery cell while improving the energy density. This helps to prevent the binder in the negative electrode plate from being unable to withstand the large stress in the expansion and shrinkage process. It also helps to reduce or avoid the damage to the conductive network in the negative electrode plate due to the volume expansion of the electrode plate. It also helps to prevent the negative electrode plate structure from collapsing during battery cycling, thereby effectively reducing the deterioration of the battery cycling performance and the battery cycle life caused by silicon expansion.

By synergistically adjusting the volume expansion of the negative electrode plate and the silicon content using the relational expression $R/(1.05 \cdot X+(1-X) \cdot 1.4)$, it is more conducive to suppressing the volume expansion of the negative electrode plate and the corresponding battery cell while increasing the energy density, so that the secondary battery with the silicon-containing negative electrode has both high energy density and long cycle life.

Based on any suitable embodiment in the present application, further, in some embodiments, in the same charging and discharging cycle process, the ratio Ra of the total volume during charging to the total volume during discharging of the negative electrode plate and the positive electrode plate is 1.03 to 1.20.

Based on any suitable embodiment in the present application, further, in some embodiments, Ra is 1.06 to 1.15.

In the same charging and discharging cycle process, the ratio Ra of the total volume during charging to the total volume during discharging of the negative electrode plate and the positive electrode plate can reflect the degree of difference in battery cell volume during charging and discharging. By controlling Ra within the above range, the changes in volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the volume ratio $R_{N/P}$ of the negative electrode plate and the positive electrode plate during charging or discharging of the secondary battery is 0.7 to 1.6.

In the same charging and discharging cycle process, the volume ratio $R_{N/P}$ of the negative electrode plate and the positive electrode plate during charging or discharging of the secondary battery can also reflect the degree of difference in battery cell volume during charging and discharging. By controlling $R_{N/P}$ within the above range, the changes in volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the secondary battery satisfies one or more of the following features:

the volume ratio $R1_{N/P}$ of the negative electrode plate to the positive electrode plate during charging of the secondary battery is 1.0 to 1.6;
the volume ratio $R2_{N/P}$ of the negative electrode plate to the positive electrode plate during discharging of the secondary battery is 0.7 to 1.4;
the thickness of the negative electrode plate during charging of the secondary battery is 120μm to 190μm;
the thickness of the negative electrode plate during discharging of the secondary battery is 80μm to 180μm;
the thickness of the positive electrode plate during charging of the secondary battery is 100μm to 130μm;
the thickness of the positive electrode plate during discharging of the secondary battery is 110μm to 135μm;
the total thickness of the negative electrode plate and the positive electrode plate during charging of the secondary battery is 230μm to 310μm;
the total thickness of the negative electrode plate and the positive electrode plate during discharging of the secondary battery is 190μm to 300μm.

Based on any suitable embodiment in the present application, further, in some embodiments, in the same charging and discharging cycle process, the secondary battery satisfies one or more of the following features:

$R1_{N/P}$ is 1.0 to 1.55;
$R2_{N/P}$ is 0.8 to 1.35;
the thickness of the negative electrode plate during charging of the secondary battery is 130μm to 190μm;
the thickness of the negative electrode plate during discharging of the secondary battery is 100μm to 180μm;
the thickness of the positive electrode plate during charging of the secondary battery is 120μm to 130μm;
the thickness of the positive electrode plate during discharging of the secondary battery is 120μm to 135μm;
the total thickness of the negative electrode plate and the positive electrode plate during charging of the secondary battery is 250μm to 310μm;
the total thickness of the negative electrode plate and the positive electrode plate during discharging of the secondary battery is 230μm to 300μm.

Based on any suitable embodiment in the present application, further, in some embodiments, the secondary battery satisfies one or more of the following features:

$R1_{N/P}$ is 1.0 to 1.35;
$R2_{N/P}$ is 0.8 to 1.0.

When charging the secondary battery, the negative electrode plate undergoes volume expansion, while the positive electrode plate undergoes volume shrinkage. By controlling the volume ratio $R1_{N/P}$ of the negative electrode plate to the positive electrode plate within a certain range, the changes in volume expansion of the battery cell can be controlled as a whole, thereby minimizing the volume change of the battery cell during continuous cycling, which is more conducive to the stability of the battery cell and the extension of the battery cycle life.

When discharging the secondary battery, the volume of the negative electrode plate reversibly shrinks, while the volume of the positive electrode plate reversibly increases. By controlling the volume ratio $R2_{N/P}$ of the negative electrode plate to the positive electrode plate within a certain range, the changes in volume expansion of the battery cell can be controlled as a whole, thereby minimizing the volume change of the battery cell during continuous cycling, which is more conducive to the stability of the battery cell and the extension of the battery cycle life.

One or more parameters can be adjusted, including the thickness of the negative electrode plate during charging of the secondary battery, the thickness of the negative electrode plate during discharging of the secondary battery, the thickness of the positive electrode plate during charging of the secondary battery, the thickness of the positive electrode plate during discharging of the secondary battery, the total thickness of the negative and positive electrode plates during charging of the secondary battery, and the total thickness of the negative and positive electrode plates during secondary battery discharging. This allows for better control of the volume expansion of the electrode plates and the battery cell, and is more conducive to suppressing the volume expansion of the negative electrode plate (such as silicon-containing negative electrode plate) and the corresponding battery cell. This enables secondary batteries with expandable negative electrode plates (such as silicon-containing negative electrode plates) to have both high energy density and long cycle life.

Based on any suitable embodiment in the present application, further, in some embodiments, in the same latecharging and discharging cycle process, the charging and discharging cycle temperature is 25-30°C; the charging and discharging rate is 0.33-0.5C.

Based on any suitable embodiment in the present application, further, in some embodiments, the negative electrode active material includes a silicon-based material; the silicon-based material comprises one or more of elemental silicon, silicon oxide materials, silicon-carbon materials, silicon-nitrogen compounds, and silicon alloys;

optionally, the silicon-based material comprises one or more of elemental silicon, a silicon oxide material, and a silicon-carbon material;
further optionally, the silicon-based material comprises one or more of a silicon oxide material and a silicon-carbon material.

When the negative electrode active material contains silicon-based materials, the type of silicon-based material in the negative electrode active material can be selected according to the requirements of volume expansion control and energy density in the negative electrode plate. For example, the silicon-based material can include, but is not limited to, one or more of elemental silicon, silicon oxide materials, silicon-carbon materials, silicon-nitrogen compounds and silicon alloys; further, for example, the silicon-based material can include, but is not limited to, one or more of silicon oxide materials and silicon-carbon materials. Due to the free expansion of Si grains during the silicon phase transition, the volume change is large, and ordinary milled micron-sized silicon materials will produce a certain degree of expansion. $SiO_x$ materials can buffer some of the expansion of Si grains through silicon dioxide ($SiO_2$) or silicate materials. Silicon-carbon materials can reduce the expansion of silicon materials by pre-cutting templates to allow for internal expansion space.

Based on any suitable embodiment in the present application, further, in some embodiments, the negative electrode active material includes a silicon-based material, and the negative electrode active material further comprises one or more of the following materials: carbon-based materials, tin-based materials, and lithium titanate; the carbon-based material comprises one or more of graphite materials, soft carbon, and hard carbon, and the graphite material comprises one or more of artificial graphite and natural graphite.

Optionally, the negative electrode active material comprises a silicon-based material and a carbon-based material; further optionally, in the negative electrode active material, the total mass of the silicon-based material and the carbon-based material accounts for 80% to 100% of the mass of the negative electrode active material, optionally 90% to 100%, and further optionally 100%;

Optionally, the negative electrode active material comprises silicon-based materials and graphite materials; further optionally, in the negative electrode active material, the total mass of silicon-based materials and graphite materials accounts for 80% to 100% of the mass of the negative electrode active material, optionally 90% to 100%, and further optionally 100%.

When the negative electrode active material contains silicon-based materials, the remaining parts of the negative electrode active material other than the silicon-based materials do not need to be specifically limited. When the graphite material is used, the material is more readily available.

Based on any suitable embodiment in the present application, further, in some embodiments, the negative electrode active material layer comprises carbon nanotubes; the carbon nanotubes comprise one or more of single-walled carbon nanotubes and multi-walled carbon nanotubes.

Based on any suitable embodiment in the present application, further, in some embodiments, the negative electrode active material layer satisfies one or more of the following features:

the carbon nanotubes comprise single-walled carbon nanotubes;
the weight percentage of the carbon nanotubes in the negative electrode active material layer is 0.02% to 1.0%.

Based on any suitable embodiment in the present application, further, in some embodiments, the weight percentage of the carbon nanotubes in the negative electrode active material layer is 0.05% to 0.5%.

Carbon nanotubes can be used as conductive agents for negative electrode plates. Their aspect ratio can reduce or avoid poor contact of negative electrode active materials caused by the expansion of negative electrode materials (such as silicon expansion), thereby reducing the damage to the conductive network of negative electrode plates due to negative electrode material expansion (such as silicon expansion), improving the stability of negative electrode plates and battery cells, and benefiting long battery cycle life. Carbon nanotubes may include one or more of single-walled carbon nanotubes and multi-walled carbon nanotubes. Among them, single-walled carbon nanotubes have a better aspect ratio, which can significantly reduce the volume expansion of the negative electrode plate and thus reduce the expansion of the battery cell.

Based on any suitable embodiment in the present application, further, in some embodiments, the secondary battery is a lithium-ion secondary battery.

Based on any suitable embodiment in the present application, further, in some embodiments, the positive electrode plate comprises a positive electrode active material layer, the positive electrode active material layer comprises a positive electrode active material, the positive electrode active material comprises a nickel-containing lithium oxide; in the nickel-containing lithium oxide, the total atomic stoichiometry of non-lithium and non-oxygen elements is taken as 1,

the atomic stoichiometry of nickel element is denoted as n, $n \geq 0.7$;

optionally, $n \geq 0.71$;
further optionally, $n \geq 0.8$;
more further optionally, $0.8 \leq n<1$;
even further optionally, $0.9 \leq n<1$.

When the positive electrode active material contains a nickel-containing lithium oxide, the expansion and shrinkage behavior of the positive electrode plate in the charging and discharging cycle process can be adjusted by regulating the nickel content, which can be used to adjust the Y value.

Based on any suitable embodiment in the present application, further, in some embodiments, the positive electrode plate comprises a positive electrode active material layer, the positive electrode active material layer comprises a positive electrode active material, the positive electrode active material comprises a nickel-containing lithium oxide; in the nickel-containing lithium oxide, the total atomic stoichiometry of non-lithium and non-oxygen elements is taken as 1, the atomic stoichiometry of nickel element is denoted as n, the positive electrode plate satisfies $Y \leq 1.14 - 0.2n$, where $n \geq 0.8$;

optionally $0.8 \leq n<1$;
further optionally, $0.9 \leq n<1$.

Based on any suitable embodiment in the present application, further, in some embodiments, the positive electrode plate comprises a positive electrode active material layer, the positive electrode active material layer comprises a positive electrode active material; the positive electrode active material comprises one or more of ternary materials and modified ternary materials, the modified ternary material is a ternary material containing a modifying element, the modifying element exists as a doping element, as a coating element, or as a combination of doping elements and coating elements.

Based on any suitable embodiment in the present application, further, in some embodiments, the secondary battery satisfies one or more of the following features:

the positive electrode active material comprises one or more of a NCM ternary material, a NCA ternary material, a modified NCM ternary material, and a modified NCA material; wherein the modified NCM ternary material is an NCM ternary material containing the modifying element, and the modified NCA ternary material is an NCA ternary material containing the modifying element;
the modifying element in the modified ternary material comprises one or more of Na, K, Ca, Ba, Sb, Ti, Zr, W, Sr, Nb, Mo, Si, Mg, B, Cr and Ta;
the chemical formula of the positive electrode active material is $Li_x(Ni_aCo_bM_cM'_d)O_{2-e}$, where $0.6 \leq x \leq 1.2$, $0<a<1$, $0<b<1$, $0<c<1$, $0<d<1$, $a+b+c+d = 1$, $-0.1 \leq e \leq 0.1$, M includes at least one of Mn and Al, and M' comprises one or more of Na, K, Ca, Ba, Sb, Ti, Zr, W, Sr, Nb, Mo, Si, Mg, B, Cr and Ta;
the positive electrode active material comprises a nickel-containing lithium oxide; in the nickel-containing lithium oxide, the total atomic stoichiometric number of non-lithium and non-oxygen elements is taken as 1, the atomic stoichiometric number of nickel element is denoted as n, and the positive electrode plate satisfies $Y \leq 1.14-0.2n$.

Based on any suitable embodiment in the present application, further, in some embodiments, the secondary battery satisfies one or more of the following features:

$$a \geq 0.8;$$

$$n \geq 0.8,$$

optionally $0.8 \leq n<1$.

Based on any suitable embodiment in the present application, further, in some embodiments, the secondary battery satisfies one or more of the following features:

$$0.9 \leq a<1;$$

$$0.9 \leq n<1.$$

Suitable positive electrode active materials can be selected, which, on the one hand, can adjust the volume change of the positive electrode plate in the charging and discharging states, and on the other hand, can improve the performance of the positive electrode plate as required. For example, ternary active materials or their modified materials can be selected. The positive electrode active materials can be modified by doping and/or coating.

By jointly regulating the volume ratio Y of the positive electrode plate during charging and discharging of the secondary battery and the nickel content through the relational expression $Y \leq 1.14-0.2n$, it is more conducive to increasing the battery capacity while controlling an appropriate nickel content, thereby enabling the Y value of the positive electrode plate to have a more suitable range. This is more conducive to regulating the shrinkage-expansion matching of the positive electrode plate and the expandable negative electrode plate (such as silicon-containing negative electrode plate), and better inhibiting the deterioration of the battery cycling performance and the battery cycle life due to the expansion of the negative electrode material (such as silicon expansion).

When the positive electrode plate of the secondary battery is rich in nickel, in the charging state, in response to the aforementioned problems caused by the expansion of the negative electrode plate, the nickel-rich positive electrode plate can not only regulate the overall battery cell expansion through the volume shrinkage caused by the deintercalation of active ions, but also endow the secondary battery with high capacity and low cycle fading.

Based on any suitable embodiment in the present application, further, in some embodiments, the negative electrode active material layer comprises a negative electrode active material, a binder and a conductive agent; the positive electrode plate comprises a positive electrode active material layer, and the positive electrode active material layer comprises a positive electrode active material, a binder and a conductive agent.

The selected R value can be achieved by adjusting the negative electrode active material, binder, and conductive agent in the negative electrode active material layer. The selected Y value can also be achieved by adjusting the positive electrode active material, binder, and conductive agent in the positive electrode active material layer. Given that a suitable R value and Y value have been selected based on the teachings of the present application, those skilled in the art can achieve the selected R value and Y value by adjusting one or more of the types and contents of the aforementioned components.

Based on any suitable embodiment in the present application, further, in some embodiments, the secondary battery comprises an electrolyte solution; the electrolyte solution comprises a lithium salt and a solvent;

the lithium salt comprises lithium bis(fluorosulfonyl)imide and lithium hexafluorophosphate;
in the electrolyte solution, the percentage of the weight of lithium bis(fluorosulfonyl)imide relative to the sum of the weights of lithium bis(fluorosulfonyl)imide and lithium hexafluorophosphate is denoted as $W_{FSI}$, and $W_{FSI}$ is 10% to 80%.

Based on any suitable embodiment in the present application, further, in some embodiments, $W_{FSI}$ is 30% to 70%.

Based on any suitable embodiment in the present application, further, in some embodiments, the secondary battery comprises an electrolyte solution; the electrolyte solution comprises an additive, and the additive includes fluoroethylene carbonate, wherein the weight percentage of fluoroethylene carbonate in the electrolyte solution is recorded as $W_{FEC}$;
the secondary battery satisfies $W_{FEC}/X \geq 0.3$, wherein X represents the weight percentage of the silicon-based material in the negative electrode active material.

The expansion of the electrode plate and the battery cell can also be regulated by adjusting the type and content of lithium salt in the electrolyte solution. For example, for nickel-containing positive electrode, when the lithium salt comprises lithium hexafluorophosphate ($LiPF_6$), the strong oxidizing properties may cause the $LiPF_6$ electrolyte solution to generate HF, leading to various side reactions and deteriorating battery performance. By introducing lithium bis(fluorosulfonyl)imide (LIFSI), the side reactions can be significantly reduced, thereby reducing the irreversible expansion of the positive and negative electrodes, and thus reducing the overall expansion of the battery.

The additive fluoroethylene carbonate (FEC) is a film-forming additive. FEC can reduce and generate a high-strength and high-toughness SEI film on the surface of negative electrode materials (such as silicon-containing materials), which is mainly composed of LiF and supplemented by high molecular weight oligomers. This can inhibit the erosion of negative electrode active particles (such as silicon-containing particles) by electrolyte solution, effectively reduce side reactions on the surface of negative electrode materials (such as silicon-containing materials), and reduce the consumption of active lithium. Therefore, FEC has the function of reducing the expansion of negative electrode plates with expandable negative electrode materials (such as the expansion of silicon-containing negative electrodes) and improving the cycling performance of batteries. Further coordinating the amount of FEC used with the silicon content in the negative electrode can better leverage the role of FEC. This can be controlled by the relational expression between the weight percentage of FEC in the electrolyte solution ($W_{FEC}$) and the silicon content (X) ($W_{FEC}/X$). For example, $W_{FEC}/X$ can be adjusted to $\geq 0.3$. In this case, more FEC can be provided, allowing the FEC to function for a longer period of time. This can

better reduce or avoid problems that may arise after the high-quality SEI on the silicon surface is damaged, such as potentially leading to a large consumption of active lithium or even causing a drop in the cycle.

In a second aspect, the present application provides an electrical apparatus, comprising the secondary battery in the first aspect of the present application.

In a third aspect, the present application provides a method for manufacturing a secondary battery, which can be used to manufacture the secondary battery in the first aspect of the present application.

Based on any suitable embodiment in the present application, further, in some embodiments, the manufacturing method includes the following steps: providing a positive electrode plate, a negative electrode plate, a separator and an electrolyte, and assembling them to obtain the secondary battery in the first aspect of the present application; wherein, the positive electrode plate and the negative electrode plate are as defined in the first aspect of the present application.

The secondary battery may be prepared through the shrinkage-expansion matching design of the positive electrode plate and the expandable negative electrode plate (such as silicon-containing negative electrode plate), and the obtained secondary battery can significantly reduce the volume expansion of the negative electrode plate, especially the reversible expansion of the negative electrode plate, can improve the stability of the negative electrode plate, facilitate the physical bonding, electron transport, and electrolyte solution impregnating functions among active materials in the negative electrode plate, and can also reduce the expansion of the battery cell (such as silicon-containing battery cell) of the expandable negative electrode plate, thereby suppressing the deterioration of battery cycling performance and battery cycle life caused by the expansion (such as silicon expansion) of the negative electrode material.

Details of one or more embodiments of the present application are provided in the accompanying drawings and descriptions below. Other features, objectives, and advantages of the present application will become apparent from the specification, drawings, and claims.

## BRIEF DESCRIPTION OF DRAWINGS

In order to better describe and illustrate the embodiments or examples of the applications disclosed herein, reference may be made to one or more of the figures. The additional details or examples used to describe the drawings should not be considered as limiting the scope of the disclosed applications, currently described embodiments or examples, and any one of currently understood preferred embodiments of these applications. Moreover, in all of the figures, identical parts are represented by identical reference numerals. In the figures:

FIG. 1 is a schematic diagram of a secondary battery in an embodiment of the present application;
FIG. 2 is an exploded view of the secondary battery in an embodiment of the present application shown in FIG. 1; and
FIG. 3 is a schematic diagram of an electrical apparatus in which a secondary battery is used as a power source in an embodiment of the present application.

Reference numerals in the figures:

5, Secondary battery; 51, Case; 52, Electrode assembly; 53, Cover sheet; 6, Electrical apparatus.

## DETAILED DESCRIPTION

Some embodiments of a secondary battery and a manufacturing method therefor, and an electrical apparatus of the present application are disclosed below with reference to the detailed description of drawings as appropriate. However, unnecessary detailed explanations may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The numerical "ranges" disclosed in the present application are defined in the form of lower and upper limits. A given range is defined by selecting a lower limit and an upper limit, and the selected lower and upper limits define the boundaries of the particular range. The range defined in this way may comprise or may not comprise end values, any end value can be comprised or excluded independently and may be arbitrarily combined, that is, any lower limit can be combined with any upper limit to form a range. For example, if the ranges of 60-120 and 80-110 are enumerated for a particular parameter, it is understood that the ranges of 60-110 and 80-120 are also contemplatable. Additionally, if the minimum range values 1 and 2 are enumerated, and if the maximum range values 3, 4 and 5 are further enumerated, the following ranges are all contemplatable: 1-3, 1-4, 1-5, 2-3, 2-4, and 2-5. In the present application, unless stated otherwise, the numerical range "a-b" denotes an abbreviated representation of any combination of real numbers between a and b,

where both a and b are real numbers. For example, the numerical range "0-5" indicates that all real numbers between "0-5" have been listed herein, and "0-5" is only a shortened representation of these numerical combinations. Additionally, when it is stated that a certain parameter is an integer greater than or equal to 2, it is equivalent to disclosing that the parameter is an integer, such as 2, 3, 4, 5, 6, 7, 8, 9, 10, 11, or 12. For example, when a parameter is expressed as an integer selected from "2-10," it is equivalent to enumerating an integer of 2, 3, 4, 5, 6, 7, 8, 9, and 10.

Unless otherwise specified, all embodiments and optional embodiments of the present application may be combined with each other to form new technical solutions.

Unless otherwise specified, all steps of the present application can be performed sequentially or randomly, and preferably sequentially. For example, the method includes steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise particularly stated, the terms "having," "including," "containing," and "comprising" mentioned in the present application may each independently be open-ended, or may be closed-ended. For example, the "including" and "comprising" may mean that other unlisted members or temporal features may be further included or comprised, or only the listed members or temporal features may be included or comprised. The members include, for example, materials or components, structures, elements, or instruments; and non-limiting examples of the temporal features include, for example, actions, conditions for occurrence of the actions, timing, or states. The following understanding can be made: In open-ended technical features or solutions described with words such as "containing," "comprising," or "including," unless otherwise specified, additional members beyond the listed members are not excluded. This can be regarded as providing both closed-ended features or solutions composed of the listed members and open-ended features or solutions that include additional members beyond the listed members. For example, if A includes a1, a2, and a3, unless otherwise specified, it may also include other members or exclude additional members. This can be regarded as providing both features or solutions that "A is composed of a1, a2, and a3" or "A is selected from a1, a2, and a3" and features or solutions that "A not only includes a1, a2, and a3, but also includes other members".

Unless otherwise specifically stated, in the present application, the term "or" is inclusive. For example, the phrase "A or B" means "A, B, or both A and B." Further, the condition "A or B" is satisfied under any one of the following conditions: A is true (or present) and B is false (or absent); A is false (or absent) and B is true (or present); or both A and B are true (or present).

In the present application, unless otherwise specified, A (such as B) means that B is a non-limiting example of A, and may be understood as that A is not limited to B.

In the present application, unless otherwise specified, features or solutions corresponding to the "and/or" include any one of two or more than two of the above related listed items, and also include any and all combinations of the related listed items, wherein the any and all combinations include combinations of any two of the related listed items, any more of the related listed items, or all of the related listed items. For example, "A and/or B" means a group consisting of A, B, and "a combination of A and B". The "including A and/or B" may mean "including A, including B, and including A and B," or may mean "including A, including B, or including A and B," and may be properly understood based on a sentence comprising the same.

The "a plurality of," "multiple," "various," and "several" involved in the present application, unless otherwise specified, refers to a number greater than 2 or equal to 2. For example, the "one or more" means one or greater than or equal to two. It is understandable that when "any more" is involved, it refers to any suitable combination of a plurality of items, that is, a combination of "any more" items in a way without a conflict and capable of implementing the present application.

Herein, the "suitable" in the "suitable combination mode," "suitable mode," "any suitable mode," etc. shall be subject to a technical solution capable of implementing the present application.

Herein, the "preferable," "better" are only used to describe an embodiment or example with better effects, and should be understood as that they do not constitute a limitation to the scope of protection of the present application. If a plurality of "preferable" appear in a technical solution, unless otherwise specified and in the case of no contradiction or mutually restrictive relationship, each "preferable" is independent.

In the present application, the "optionally" and "optional" mean dispensable, that is, they mean any one selected from two parallel solutions of "presence" or "absence." If a plurality of "optional" appear in a technical solution, unless otherwise specified and in the case of no contradiction or mutually restrictive relationship, each "optional" is independent.

In the present application, the "further," "still further," "particularly," etc. are used for descriptive purposes and show differences of the different technical solutions in content, but should not be construed as limiting the scope of protection of the present application.

In the present application, the terms such as "first" and "second" in the phrases such as "first aspect" and "second aspect" are used only for descriptive purposes, and can neither be construed as indicating or implying a relative importance or number, nor be construed as implicitly indicating the importance or number of indicated technical features.

Moreover, the "first" and "second" only serve the purpose of non-exhaustive enumeration and description, and should be understood as that they do not constitute a closed limitation to the quantity.

In the present application, if a unit involving a data range is only followed by the right endpoint, it means that the units of the left endpoint and the right endpoint are identical. For example, 3 to 5 h or 3-5 h both means that the units of the left endpoint "3" and the right endpoint "5" are each h (hour).

The weight of the relevant components mentioned in the description of embodiments of the present application may not only refer to the content of each component, but also indicate the proportional relationship in weight between the components. Therefore, as long as the content of the relevant components in the description of embodiments of the present application is proportionally enlarged or reduced, it is within the scope disclosed in the description of embodiments of the present application. Further, the weight in the specification of the embodiments of the present application may be in μg, mg, g, kg, or other mass units known in the chemical industry.

In the present application, the exemplary descriptions such as "in some embodiments (or examples)" and "in one embodiment (or example)" may cover, but are not limited to, the following meanings: these solutions can be combined with other solutions in a reasonable manner to form new technical solutions.

In the present application, the exemplary descriptions such as "Based on any suitable embodiment in the present application, further, in some embodiments" or similar descriptions can encompass but are not limited to the following meanings: these solutions can be combined in a reasonable way to form new technical solutions.

The silicon-based material, e.g., silicon, has a capacity that is about 10 times higher than that of graphite, and thus can achieve higher energy density. The silicon-based material has the advantages, such as low costs and high specific capacity, and is a highly favored negative electrode material. However, during charging and discharging of the battery, the volume expansion of silicon-based materials is much higher than that of graphite materials. This results in severe volume expansion problems for the silicon-based negative electrode, which can easily lead to a significant deterioration of the battery cycling performance and seriously affect the battery life. In addition, silicon-based negative electrodes can cause significant expansion forces at the battery cell layer, which is difficult to improve or overcome.

In view of the aforementioned common technical problems, a first aspect of the present application provides a secondary battery. The secondary battery comprises an expandable negative electrode plate, which has reduced volume expansion of the negative electrode plate and volume expansion of the battery cell, thus suppressing the damage to the battery cycle life caused by the expansion of the negative electrode material. When the secondary battery comprises a silicon-containing negative electrode plate, it has reduced volume expansion of the negative electrode plate and volume expansion of the battery cell, thus suppressing the damage to the battery cycle life caused by silicon expansion.

In the present application, unless otherwise specified, the term "silicon expansion" refers to the expansion caused by silicon-based materials.

Based on any suitable embodiment in the present application, further, in some embodiments, the present application provides a secondary battery, the secondary battery comprises a positive electrode plate and a negative electrode plate, the negative electrode plate comprises a negative electrode active material layer, and the negative electrode active material layer comprises a negative electrode active material.

In the same charging and discharging cycle process, the volume ratio of the negative electrode plate during charging and discharging of the secondary battery is denoted as R, where $R \leq 1.5$, and the volume ratio of the positive electrode plate during charging and discharging of the secondary battery is denoted as Y, where $Y \leq 0.98$.

When the negative electrode plate contains expandable negative electrode materials, especially expandable negative electrode active materials, the volume expansion problem can easily lead to significant deterioration of the battery cycling performance and seriously affect the battery life. In addition, it can also cause a large expansion force at the battery cell level. One of the non-limiting examples of expandable negative electrode materials and expandable negative electrode active materials is a silicon-based material.

When the secondary battery is charged and discharged, the electrode plate may shrink or expand due to factors such as the intercalation and deintercalation behavior of active ions and changes in grain spacing. When the secondary battery is charged, active ions are intercalated into the negative electrode plate, causing the electrode plate to expand, while active ions are deintercalated from the positive electrode plate, causing the electrode plate to shrink. When the secondary battery is discharged, active ions are deintercalated from the negative electrode plate, causing the electrode plate to shrink back, while active ions are reversibly intercalated into the positive electrode plate, causing the electrode plate volume to increase again. In the same charging and discharging cycle process, the volume ratio R of the negative electrode plate during charging and discharging of the secondary battery can reflect the degree of reversible expansion of the negative electrode plate. It is necessary to keep the R value within 150%, that is, $R \leq 1.5$. If the R value is too large, the binder may not be able to withstand the large stress in the expansion and shrinkage process. It may also cause the electrical contact of the negative electrode active material to deteriorate due to the expansion of the electrode plate volume, which may lead to the damage to the conductive network in the negative electrode plate. It may even cause the negative electrode plate structure to collapse during battery cycling, resulting in premature failure of the battery cell. In the aforementioned charging and discharging cycle process, the volume ratio Y of the positive electrode plate during charging

and discharging of the secondary battery can reflect the degree of reversible shrinkage of the positive electrode plate, and a Y value not exceeding 0.98 helps to enable the battery cell to resist the expansion of the negative electrode plate as a whole. The secondary battery provided in the present application, through the shrinkage-expansion matching design of the positive electrode plate and the expandable negative electrode plate, can significantly reduce the volume expansion of the negative electrode plate, especially the reversible expansion of the negative electrode plate, can improve the stability of the negative electrode plate and facilitate the physical bonding, electron transport, and electrolyte solution infiltration and other functions among the active materials in the negative electrode plate. It can also reduce the expansion of the battery cell, thereby suppressing the deterioration of the battery cycling performance and the battery cycle life caused by the expansion of the negative electrode material.

In the present application, unless otherwise specified, "expandable negative electrode plate" refers to negative electrode plates with $R > 1$. The term "expandable" refers to the volume expansion that occurs under charging conditions in the charging and discharging cycle process. It is understandable that the expandable negative electrode plate contains expandable materials. In the negative electrode active material layer of the negative electrode plate, the negative electrode active material is the main material, which is used to provide deintercalation and intercalation sites for active ions. Without limitation, the negative electrode active material layer of the negative electrode plate contains an expandable negative electrode active material. Non-limiting examples of the expandable negative electrode active material can include silicon-based materials, and the silicon-based material is an expandable negative electrode active material well-known to those skilled in the art. In addition, tin-based materials can also be used as an expandable negative electrode active material; in the charging and discharging cycle process, the volume expansion rate of tin-based materials may exceed that of silicon-based materials, and may even reach 2 to 3 times that of silicon-based materials. The volume expansion rate of carbon-based materials used as negative electrode active materials is usually much lower than that of silicon-based materials in the charging and discharging cycle process. For a given R value, the R value can be controlled within a certain range by selecting a suitable negative electrode active material. The volume expansion rate can be calculated using the following formula: Volume expansion rate = (volume during expansion - initial volume) / initial volume $\times$ 100%. The initial volume can be the volume in the shrunk state during discharge, at which point the volume expansion rate is numerically equal to the R value. The initial volume can also refer to the volume of the material when no expansion force is applied.

Based on any suitable embodiment in the present application, further, in some embodiments, the secondary battery satisfies one or more of the following features:

R is 1.1 to 1.5, optionally R is 1.1 to 1.4, and further optionally R is 1.15 to 1.4;
Y is 0.9 to 0.98, and optionally, Y is 0.95 to 0.98.

By jointly regulating R and Y, the shrinkage-expansion matching of the positive and negative electrode plates can be more precisely controlled, thereby better suppressing the deterioration of the battery cycling performance and the battery cycle life caused by the expansion of the negative electrode material.

Based on any suitable embodiment in the present application, further, in some embodiments, the negative electrode active material includes a silicon-based material.

Silicon-based materials are materials that are prone to high volume expansion in the charging and discharging cycle process and can be used as negative electrode active materials. When the negative electrode active material of the negative electrode plate comprises silicon-based materials, it is easy to cause a high R value and form an expandable negative electrode plate.

Based on any suitable embodiment in the present application, further, in some embodiments, the present application provides a secondary battery comprising a positive electrode plate and a negative electrode plate, the negative electrode plate comprises a negative electrode active material layer, the negative electrode active material layer comprises a negative electrode active material, and the negative electrode active material includes a silicon-based materials.

In the same charging and discharging cycle process, the volume ratio of the negative electrode plate during charging and discharging of the secondary battery is denoted as R, where $R \leq 1.5$, and the volume ratio of the positive electrode plate during charging and discharging of the secondary battery is denoted as Y, where $Y \leq 0.98$.

In the present application, unless otherwise specified, the electrode plate may be the positive electrode plate or the negative electrode plate, and the "active material" in the electrode plate refers to a substance capable of reversibly intercalating and deintercalating active ions. Unless otherwise specified, the "negative electrode active material" refers to a substance used for a negative electrode plate and capable of reversibly intercalating and deintercalating active ions; and the "positive electrode active material" refers to a substance used for a positive electrode plate and capable of reversibly deintercalating and intercalating active ions. During charging of the secondary battery, the active ions are deintercalated from the positive electrode, and are intercalated into the negative electrode through the electrolyte; while during discharging of the secondary battery, the active ions are deintercalated from the negative electrode, and are intercalated

into the positive electrode. The active ions are not particularly limited, and may be lithium ions, in which case it corresponds to a lithium-ion secondary battery.

In the present application, the "active material" and the "active material" have the same meaning and can be used interchangeably; the "positive electrode active material" and the "positive electrode active material" have the same meaning and can be used interchangeably; and the "negative electrode active material" and the "negative electrode active material" have the same meaning and can be used interchangeably.

In the present application, unless otherwise specified, the "active material layer" comprises a positive electrode active material layer of the positive electrode plate and a negative electrode active material layer of the negative electrode plate, and may refer to the positive electrode active material layer or the negative electrode active material layer depending on the specific situation. It is understandable that the positive electrode active material layer comprises a positive electrode active material, and the negative electrode active material layer comprises a negative electrode active material.

In the present application, unless otherwise stated, the volume expansion/shrinkage changes of the negative electrode plate, the volume shrinkage/expansion changes of the positive electrode plate, and the volume expansion of the battery cell are examined in the charging and discharging cycle process, and are examined in the same charging and discharging cycle process. Unless otherwise specified, the charging and discharging temperatures, i.e., the charging and discharging cycle temperatures, can be 20°C to 35°C, further can be 25°C to 30°C, and even further can be 25°C.

When the secondary battery is charged and discharged, the electrode plate may shrink or expand due to factors such as the intercalation and deintercalation behavior of active ions and changes in grain spacing. When the secondary battery is charged, active ions are intercalated into the negative electrode plate, causing the electrode plate to expand, while active ions are deintercalated from the positive electrode plate, causing the electrode plate to shrink. When the secondary battery is discharged, active ions are deintercalated from the negative electrode plate, causing the electrode plate to shrink back, while active ions are reversibly intercalated into the positive electrode plate, causing the electrode plate volume to increase again.

In the present application, unless otherwise specified, the volume changes of the negative electrode plate, positive electrode plate and battery cell are tested under the charging and discharging conditions in the same continuous charging and discharging cycle. A continuous charging and discharging process is called one charging and discharging cycle. The number of cycles in this charging and discharging cycle process can be one or more. It can be the volume parameters of the charging and discharging states in one charging and discharging cycle, or it can be the average value of the volume parameters after multiple consecutive charging and discharging cycles. It is understandable that charging and discharging occur under the same temperature conditions. Unless otherwise specified, the charging and discharging cycle temperatures, can be 20°C to 35°C, further can be 25°C to 30°C, and even further can be 25°C. Unless otherwise specified, charging and discharging are performed at a rate of 0.33 to 0.5C, and optionally, at a rate of 0.33C. In the present application, the following conditions can be used for charging and discharging cycles: when charging, the battery is fully charged, which means to charge it to its maximum capacity, and when discharging, the aforementioned fully charged amount of electricity is exhausted, which means to completely discharge the battery.

In the present application, unless otherwise specified, for each volume parameter, such as R, Y, and each thickness parameter, the volume parameter obtained after charging is regarded as the volume parameter "during charging," and the volume parameter obtained after discharging is regarded as the volume parameter "during discharging".

When the number of cycles in the charging and discharging cycle process is multiple, the volume parameter after the end of charging in the last charging and discharging cycle is recorded as the volume parameter "during charging," and the volume parameter after the end of discharging in the last charging and discharging cycle is recorded as the volume parameter "during discharging".

Unless otherwise stated in the present application, the volume expansion/shrinkage parameters of the positive and negative electrodes are tested in the following charging and discharging cycle:

(1) the battery to be tested is placed in a constant temperature environment at a preset charging and discharging temperature Tc for a preset time t1, and the initial volume values of the positive and negative electrodes are tested;
(2) then, under the preset voltage U2 to U1 of the preset charging voltage U1 to the preset discharge voltage U2, the battery is charged to the preset charging voltage U1 according to the preset rate, and then charged at a constant voltage under the preset charging voltage U1 until the current $\leq$ 0.05C. The battery is allowed to stand for a preset time t2, which is considered as the end of charging, the volume values of the positive and negative electrodes are tested and recorded as "volume during charging";
(3) then, the battery is discharged to the preset discharge voltage U2 according to the aforementioned preset rate, which is considered to be the end of the discharge, the volume values of the positive and negative electrodes are tested and recorded as "discharge volume"; the ratio of the "charging volume" to the "discharge volume" of the negative electrode plate is R, and the ratio of the "charging volume" to the "discharge volume" of the positive electrode pate is Y.

The preset charge/discharge temperature Tc can be 25-30°C, and further such as 25°C.

It is understandable that the preset charging voltage U1 is less than or equal to the charging limit voltage $U_{c1}$ of the battery to be tested, and the preset discharging voltage U2 is greater than or equal to the discharging cut-off voltage $U_{do}$ of the battery to be tested. Furthermore, the charging voltage U1 can be selected from 4.0 to 4.4V, and the discharging voltage U2 can be selected from 2.5 to 3.0V. The charging limit voltage and discharge cut-off voltage of the battery to be tested have well-known meanings in the art and can be obtained by conventional methods or according to the definitions provided by the battery manufacturer.

The preset rate can be 0.33 to 0.5C, further such as 0.33C, 0.5C.

The preset duration t1 can be 1 h to 2.5 h, further such as 2 h.

The preset duration t2 can be 8min to 15min, further such as 10 min.

Taking a preset charging voltage U1 of 4.2V and a preset discharging voltage U2 of 2.8V as an example, unless otherwise stated, the volume expansion/shrinkage parameters of the positive and negative electrodes are tested in the following charging and discharging cycle:

(1) the battery to be tested is allowed to stand in a constant temperature environment at 25°C for 2 h, and the initial volume values of the positive and negative electrodes are tested;
(2) then, under 2.8V to 4.2V, the battery is charged at 0.33C to 4.2V, and then under 4.2V, charged at a constant voltage until the current is ≤0.05C, the battery is allowed to stand for 10 min, which is considered to be the end of charging, the volume values of the positive and negative electrodes are measured and recorded as "volume during charging";
(3) then, the battery is discharged to 2.8V at 0.33C, which is considered the end of the discharge, the volume of the positive and negative electrodes are measured and recorded as "volume during discharge".

The dimensions of the positive and negative electrode plates, including but not limited to thickness, can be measured using a micrometer. Unless otherwise specified, the following method can be used for testing: take at least two identical battery cells and perform one charging and discharging cycle under the same conditions; disassemble the battery cells after charging and discharging respectively; take out the positive and negative electrode plates from at least one battery cell after charging and at least another battery cell after discharging; measure the electrode plate thickness with a micrometer or with a scanning electron microscope (SEM) image of the brittle fracture section.

Battery cell-level expansion mainly consists of two parts: one is the reversible expansion of the electrode plate during a single charging and discharging cycle, and the other is the irreversible expansion of the electrode plate volume during its life. When the reversible expansion of the negative electrode plate exceeds 50%, the negative electrode active material expands and pulls on the binder, which easily causes large deformation of the binder, resulting in insufficient binder strength, yielding or even breakage, loss of electrical contact among the active materials, and collapse of the electrode plate structure. Battery cell-level expansion is difficult to significantly improve or overcome. For example, if the volume ratio of a negative electrode plate containing an expandable negative electrode material (such as silicon-containing negative electrode) is very high during expansion and shrinkage (e.g., higher than 1.8, higher than 1.9), simply pairing it with a slightly shrinkable positive electrode can alleviate the expansion at the battery cell level to some extent, but it will cause instability of the electrode plate and easily lead to premature battery cell failure. When a negative electrode plate containing an expandable negative electrode material (such as silicon-containing negative electrode) undergoes such high volume expansion, for such a large expansion and contraction change, the binder in the negative electrode plate will have difficulty withstanding such a high stress, which may very likely cause the electrode plate structure to collapse during cycling. Moreover, in the face of such large volume expansion and shrinkage changes, the conductive network in the negative electrode plate is also very easy to be damaged by the huge volume expansion, ultimately causing premature failure of the battery cell.

The volume ratio of the negative electrode plate during charging and discharging of the secondary battery in the same charging and discharging cycle is recorded as R.

The R value of the negative electrode plate can be controlled by the composition of the negative electrode active material layer (such as the type of negative electrode active material). For example, R can be adjusted by one or more of the following methods: changing the type and/or content (such as silicon content X below) of the expandable negative electrode active material (such as silicon-based material), changing the particle size and/or distribution of the negative electrode active material, adjusting the type and/or amount of the conductive agent, and adjusting the type and/or amount of the binder. For example, increasing the silicon content X can upregulate R. A series of formulations can be examined by changing the aforementioned parameters, and the influence of each parameter on R can be tested. A correspondence table with R can be established, so that the composition of the appropriate negative electrode active material layer can be selected according to the preset R, including an appropriate amount of the silicon-based material. As a non-limiting example, the $D_v50$ of the negative electrode active material can be adjusted in the range of 1 μm to 30 μm; furthermore, the $D_v50$ of SiOx material can be adjusted in the range of 1 μm to 20 μm, the $D_v50$ of silicon-carbon material can be adjusted in the range of 1 μm to 30 μm, and the $D_v50$ of elemental silicon can be adjusted in the range of 1 μm to 10 μm.

The volume ratio R of the negative electrode plate during charging and discharging of the secondary battery can reflect the degree of reversible expansion of the negative electrode plate. It is necessary to keep the R value within 50%, that is, $R \leq 1.5$. If the R value is too large, the binder may not be able to withstand the large stress in the expansion and shrinkage process. It may also cause the electrical contact of the negative electrode active material to deteriorate due to the expansion of the electrode plate volume, which may lead to the damage to the conductive network in the negative electrode plate. It may even cause the negative electrode plate structure to collapse during battery cycling, resulting in premature failure of the battery cell.

Typically, the expansion and shrinkage of the negative electrode plate during charging and discharging is mainly due to the negative electrode active material. When the negative electrode active material contains silicon-based materials, the expansion and shrinkage caused by the silicon-based materials are mainly due to the storage mechanism of active ions by the silicon-based materials. The silicon-based materials achieve the intercalation and deintercalation of active ions through alloying/dealloying, which leads to a large change in volume. The silicon content X affects the amount of active ions that can be intercalated into and deintercalated from the negative electrode plate. Therefore, the silicon content X can be used as the main parameter to adjust the change of the R value of the negative electrode plate. In addition, the R value range can be precisely adjusted by adjusting one or more of the following aspects of the composition of the negative electrode active material layer: particle size and distribution of the negative electrode active material, adjustment of the type and amount of conductive agent, adjustment of the type and amount of binder, etc. Moreover, these parameters can be appropriately selected within the selectable range of one or more of the aforementioned parameters according to the R value requirements.

The volume ratio of the positive electrode plate during charging and discharging of the secondary battery in the same charging and discharging cycle is recorded as Y.

The Y value of the positive electrode plate can be controlled by the composition of the positive electrode active material layer (such as the type of positive electrode active material). For example, Y can be adjusted by one or more of the following methods: changing the type and/or amount of the positive electrode active material, changing the particle size and/or distribution of the positive electrode active material, adjusting the type and/or amount of the conductive agent, and adjusting the type and/or amount of the binder. For example, Y can be reduced by decreasing the amount of binder, replacing at least part of the dotted carbon black with carbon nanotubes as the conductive agent, and replacing at least part of single crystals with polycrystals as the positive electrode active material. A series of formulations can be examined by changing the aforementioned parameters, and the influence of each parameter on Y can be tested. A correspondence table with Y can be established, so that the composition of the appropriate positive electrode active material layer can be selected according to the preset Y, including the appropriate type of positive electrode active material. As a non-limiting example, the $D_V50$ of the positive electrode active material can be adjusted in the range of 1 $\mu$m to 20 $\mu$m.

In the aforementioned charging and discharging cycle process, the volume ratio Y of the positive electrode plate during charging and discharging of the secondary battery can reflect the degree of reversible shrinkage of the positive electrode plate, and a Y value not exceeding 0.98 helps to enable the battery cell to resist the expansion of the expandable negative electrode plate (such as silicon-containing negative electrode plate) as a whole.

The expansion and shrinkage of the positive electrode plate during charging and discharging is mainly due to the change in the lattice size of the positive electrode active material caused by the intercalation and deintercalation of active ions. With a given Y value, those skilled in the art can determine suitable positive electrode active materials from known materials. The Y value range can be precisely adjusted by adjusting one or more of the following aspects of the composition of the positive electrode active material layer: the type and amount of the positive electrode active material, the particle size and distribution of the positive electrode active material, the type and amount of the conductive agent, the type and amount of the binder. Moreover, these parameters can be appropriately selected within the selectable range of one or more of the aforementioned parameters according to the Y value requirements.

The secondary battery provided in the present application, through the shrinkage-expansion matching design of the positive electrode plate and the silicon-containing negative electrode plate, can significantly reduce the volume expansion of the negative electrode plate, especially the reversible expansion of the negative electrode plate, can improve the stability of the negative electrode plate and facilitate the physical bonding, electron transport, and electrolyte solution infiltration and other functions among the active materials in the negative electrode plate. It can also reduce the expansion of the battery cell (such as silicon-containing battery cell) with the expandable negative electrode plate, thereby suppressing the deterioration of the battery cycling performance and the battery cycle life caused by the expansion of the negative electrode material (such as silicon expansion).

When the electrode plate expands too much, causing the conductive network to deteriorate or fail, purple spots or crystallization may appear at the electrode plate - electrolyte solution interface.

Based on any suitable embodiment in the present application, further, in some embodiments, the negative electrode active material layer comprises a negative electrode active material, a binder and a conductive agent; the positive electrode plate comprises a positive electrode active material layer, and the positive electrode active material layer comprises a positive electrode active material, a binder and a conductive agent.

The selected R value can be achieved by adjusting the negative electrode active material, binder, and conductive agent in the negative electrode active material layer. The selected Y value can also be achieved by adjusting the positive electrode active material, binder, and conductive agent in the positive electrode active material layer. Given that suitable R value and Y value have been selected based on the teachings of the present application, those skilled in the art can achieve the selected R value and Y value by adjusting one or more of the features such as type and content of the aforementioned components. For example, when the positive electrode active material is lithium cobalt oxide ($LiCoO_2$), Y may be greater than 1. The present application can select a suitable positive electrode active material based on the selected Y value, and the positive electrode active material may contain little or no lithium cobalt oxide.

Based on any suitable embodiment in the present application, further, in some embodiments, in the same charging and discharging cycle process, the volume ratio R of the negative electrode plate during charging and discharging of the secondary battery is 1.1 to 1.5; optionally, R is 1.1 to 1.4; further optionally, R is 1.15 to 1.4. R may also be any one of the following values, or may be selected from intervals consisting of any two of the following values: 1.1, 1.2, 1.3, 1.4, 1.5, etc.

On a substrate that coordinates and controls the shrinkage-expansion relationship between the positive electrode plate and the silicon-containing negative electrode plate, the volume ratio R of the negative electrode plate during charging and discharging of the secondary battery can be further controlled within a certain range. This is more conducive to controlling the expansion of the negative electrode plate within a certain range, thereby improving the stability of the negative electrode plate, reducing battery cell expansion, and reducing the adverse effects of volume expansion in the silicon-containing negative electrode system on the battery cycling performance and the battery cycle life.

Based on any suitable embodiment in the present application, further, in some embodiments, during the same charging and discharging cycle described above, the volume ratio Y of the positive electrode plate during charging and discharging of the secondary battery is 0.9 to 0.98; optionally, Y is 0.95 to 0.98. Y may also be any one of the following values, or may be selected from intervals consisting of any two of the following values: 0.9, 0.92, 0.94, 0.95, 0.96, 0.98, etc.

On a substrate that coordinates and controls the shrinkage-expansion relationship between the positive electrode plate and the expandable negative electrode plate (such as silicon-containing negative electrode plate), the volume ratio Y of the positive electrode plate during charging and discharging of the secondary battery can be further controlled within a certain range, which is more conducive to suppressing the expansion of the battery cell as a whole, improving the battery cycling performance, and extending the battery cycle life.

Based on any suitable embodiment in the present application, further, in some embodiments, R is 1.1 to 1.5 and Y is 0.9 to 0.98. In conjunction with other examples of R and Y, R and Y can also be combined in any suitable manner. For example, R is 1.1 to 1.4 and Y is 0.9 to 0.98, or R is 1.1 to 1.5 and Y is 0.95 to 0.98, or R is 1.1 to 1.4 and Y is 0.95 to 0.98, etc.

Furthermore, by jointly regulating R and Y, the shrinkage-expansion matching of the positive electrode plate and the silicon-containing negative electrode plate can be more precisely controlled, thereby better suppressing the deterioration of the battery cycling performance and the battery cycle life caused by silicon expansion.

Based on any suitable embodiment in the present application, further, in some embodiments, the weight percentage of the silicon-based material in the negative electrode active material is denoted as X, $X \geq 3\%$; optionally, X is 3% to 40%; further optionally, X is 5% to 25%; even further optionally, X is 15% to 25%. X may also be any one of the following percentages, or may be selected from intervals consisting of any two of the following percentages: 3%, 5%, 6%, 8%, 10%, 12%, 14%, 15%, 16%, 18%, 20%, 24%, 25%, 26%, 28%, 30%, 35% etc. X can also be selected from any of the following ranges: 10%-35%, 10%-30%, 10%-28%, 10%-25%, 10%-20%, 5%-35%, 5%-30%, 5%-28%, 5%-20%, 3%-35%, 3%-30%, 3%-28%, 3%-25%, 3%-20%, etc.

In the present application, the weight percentage of silicon-based materials in the negative electrode active material can also be referred to as silicon content, and is denoted as X. Unless otherwise specified, the silicon content X can be tested using the following method: disassemble the battery cell to obtain the negative electrode plate, use solvent washing, ultrasonic dispersion and other methods to obtain the negative electrode active material from the negative electrode active material layer, and use inductively coupled plasma (ICP) to test the weight percentage of the silicon-based material in the negative electrode active material.

Based on any suitable embodiment in the present application, further, in some embodiments, on the basis of satisfying $R \leq 1.5$ and $Y \leq 0.98$, X can be combined with R in any suitable way, X can also be combined with Y in any suitable way, and X can also be combined with R and Y in any suitable way.

Silicon has a capacity about 10 times higher than graphite. Therefore, increasing the silicon content in the negative electrode plate is conducive to achieving higher energy density. However, silicon-containing negative electrodes expand significantly during charging, which can reduce the stability of the negative electrode plate and lead to larger battery cell expansion. This is not conducive to the battery cycling performance and can affect the battery life. By controlling the weight percentage X of silicon-based materials in the negative electrode active material (also known as silicon content) within a certain range, it helps to better suppress the expansion of the negative electrode plate and the battery cell while improving the energy density. This helps to prevent the binder in the negative electrode plate from being unable to withstand the large stress in the expansion and shrinkage process. It also helps to reduce or avoid the damage to the

conductive network in the negative electrode plate due to the volume expansion of the electrode plate. It also helps to prevent the negative electrode plate structure from collapsing during battery cycling, thereby effectively reducing the deterioration of the battery cycling performance and the battery cycle life caused by silicon expansion.

Based on any suitable embodiment in the present application, further, in some embodiments, the negative electrode plate satisfies $0.8 \le R/(1.05 \cdot X+(1-X) \cdot 1.4) \le 1.2$; where, X is the weight percentage of the silicon-based material in the negative electrode active material;

optionally, the negative electrode plate satisfies $0.8 \le R/(1.05 \cdot X+(1-X) \cdot 1.4) \le 1.1$;
optionally, the negative electrode plate satisfies $0.85 \le R/(1.05 \cdot X+(1-X) \cdot 1.4) \le 1.05$.

$R/(1.05 \cdot X+(1-X) \cdot 1.4)$ can be denoted as the correction coefficient $\alpha$, which can be used to better balance the conflict between the increase in silicon content and the volume expansion of silicon-containing negative electrodes. The correction coefficient $\alpha$ can be any of the following values, or may be selected from intervals consisting of any two of the following values: 0.8, 0.9, 1.0, 1.1, 1.2, etc. It can also be any of the following ranges: 0.8 - 1.1, 0.85 - 1.05, etc.

Based on any suitable embodiment in the present application, further, in some embodiments, the correction coefficient $\alpha$ can be combined with Y in any appropriate manner.

By synergistically adjusting the volume expansion of the negative electrode plate and the silicon content using the relational expression $R/(1.05 \cdot X+(1-X) \cdot 1.4)$, it is more conducive to suppressing the volume expansion of the negative electrode plate and the corresponding battery cell while increasing the energy density, so that the secondary battery with the silicon-containing negative electrode has both high energy density and long cycle life.

In some embodiments, a secondary battery is provided, which comprises a positive electrode plate and a negative electrode plate; the negative electrode plate comprises a negative electrode active material layer, the negative electrode active material layer comprises a negative electrode active material, a binder and a conductive agent, and the negative electrode active material includes a silicon-based material; the positive electrode plate comprises a positive electrode active material layer, the positive electrode active material layer comprises a positive electrode active material, a binder and a conductive agent.

In the same charging and discharging cycle process, the volume ratio of the negative electrode plate during charging and discharging of the secondary battery is denoted as R, and R is 1.1 to 1.5, and the volume ratio of the positive electrode plate during charging and discharging of the secondary battery is denoted as Y, and Y is 0.9 to 0.98.

The weight percentage of the silicon-based material in the negative electrode active material is denoted as X, X is $\ge 3\%$, and $0.8 \le R/(1.05 \cdot X+(1-X) \cdot 1.4) \le 1.2$.

By combining R and Y, a shrinkage-expansion matching design can be achieved for the positive electrode plate and the expandable negative electrode plate (such as silicon-containing negative electrode plate). The selected R value can be achieved by adjusting the negative electrode active material, binder and conductive agent in the negative electrode active material layer, and the selected Y value can be achieved by adjusting the positive electrode active material, binder and conductive agent in the positive electrode active material layer. By employing a shrinkage-expansion matching design for the positive electrode plate and the expandable negative electrode plate (such as silicon-containing negative electrode plate), it can significantly reduce the volume expansion of the negative electrode plate, especially the reversible expansion of the negative electrode plate, can improve the stability of the negative electrode plate, and facilitate the physical bonding, electron transport, and electrolyte infiltration functions among the active materials in the negative electrode plate. It also reduces the expansion of the battery cell (such as silicon-containing battery cell) including the expandable negative electrode plate, thereby suppressing the deterioration of the battery cycling performance and the battery cycle life caused by the expansion of the negative electrode material (such as silicon expansion). Furthermore, by coordinating the R and X relationship, with a certain X, energy density can be better improved and the expansion of the negative electrode plate and the battery cell can be better suppressed. This is more conducive to preventing the binder in the negative electrode plate from being unable to withstand the large stress in the expansion and shrinkage process, and it is also more conducive to reducing or avoiding the damage to the conductive network in the negative electrode plate due to the volume expansion of the electrode plate. It is also more conducive to preventing the collapse of the negative electrode plate structure during battery cycling, thus better reducing the deterioration of the battery cycling performance and the battery cycle life caused by silicon expansion.

Based on any suitable embodiment in the present application, further, in some embodiments, in the same charging and discharging cycle process, the ratio Ra of the total volume during charging to the total volume during discharging of the negative electrode plate and the positive electrode plate is 1.03 to 1.20; optionally, Ra is 1.03 to 1.15; further optionally, Ra is 1.06 to 1.15. Ra may also be any one of the following values, or may be selected from intervals consisting of any two of the following values: 1.03, 1.05, 1.06, 1.08, 1.10, 1.12, 1.14, 1.15, 1.16, 1.18, 1.20, etc.

In the same charging and discharging cycle process, the ratio Ra of the total volume during charging to the total volume during discharging of the negative electrode plate and the positive electrode plate can reflect the degree of difference in battery cell volume during charging and discharging. By controlling Ra within the above range, the changes in

volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the volume ratio $R_{N/P}$ of the negative electrode plate and the positive electrode plate during charging or discharging of the secondary battery is 0.7 to 1.6.

In the same charging and discharging cycle process, the volume ratio $R_{N/P}$ of the negative electrode plate and the positive electrode plate during charging or discharging of the secondary battery can also reflect the degree of difference in battery cell volume during charging and discharging. By controlling $R_{N/P}$ within the above range, the changes in volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the volume ratio $R1_{N/P}$ of the negative electrode plate to the positive electrode plate during charging of the secondary battery is 1.0 to 1.6; optionally, $R1_{N/P}$ is 1.0 to 1.55; further optionally, $R1_{N/P}$ is 1.0 to 1.35. $R1_{N/P}$ may also be any one of the following values, or may be selected from intervals consisting of any two of the following values: 1.0, 1.05, 1.1, 1.15, 1.2, 1.25, 1.3, 1.35, 1.4, 1.45, 1.5, 1.55, 1.6, etc.

When charging the secondary battery, the negative electrode plate undergoes volume expansion, while the positive electrode plate undergoes volume shrinkage. By controlling the volume ratio $R1_{N/P}$ of the negative electrode plate to the positive electrode plate within a certain range, the changes in volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the volume ratio $R2_{N/P}$ of the negative electrode plate to the positive electrode plate during discharging of the secondary battery is 0.7 to 1.4; optionally, $R2_{N/P}$ is 0.8 to 1.35; further optionally, $R2_{N/P}$ is 0.8 to 1.0. $R2_{N/P}$ may also be any one of the following values, or may be selected from intervals consisting of any two of the following values: 0.7, 0.75, 0.8, 0.85, 0.9, 0.95, 1.0, 1.05, 1.1, 1.15, 1.2, 1.25, 1.3, 1.35, 1.4, etc.

When discharging the secondary battery, the volume of the negative electrode plate reversibly shrinks, while the volume of the positive electrode plate reversibly increases. By controlling the volume ratio $R2_{N/P}$ of the negative electrode plate to the positive electrode plate within a certain range, the changes in volume expansion of the battery cell can be controlled as a whole, thereby minimizing the volume change of the battery cell during continuous cycling, which is more conducive to the stability of the battery cell and the extension of the battery cycle life.

Based on any suitable embodiment in the present application, further, in some embodiments, in the same charging and discharging cycle process, the thickness of the negative electrode plate during charging of the secondary battery is 120μm to 190μm, optionally 130μm to 190μm.

Based on any suitable embodiment in the present application, further, in some embodiments, in the same charging and discharging cycle process, the thickness of the negative electrode plate during discharging of the secondary battery is 80μm to 180μm, optionally 100μm to 180μm.

Based on any suitable embodiment in the present application, further, in some embodiments, in the same charging and discharging cycle process, the thickness of the positive electrode plate during charging of the secondary battery is 100μm to 130μm, optionally 120μm to 130μm.

Based on any suitable embodiment in the present application, further, in some embodiments, in the same charging and discharging cycle process, the thickness of the positive electrode plate during discharging of the secondary battery is 110μm to 135μm, optionally 120μm to 135μm.

Based on any suitable embodiment in the present application, further, in some embodiments, in the same charging and discharging cycle process, the total thickness of the negative electrode plate and the positive electrode plate during charging of the secondary battery is 230μm to 310μm, optionally 250μm to 310μm.

Based on any suitable embodiment in the present application, further, in some embodiments, in the same charging and discharging cycle process, the total thickness of the negative electrode plate and the positive electrode plate during discharging of the secondary battery is 190μm to 300μm, optionally 230μm to 300μm.

Based on any suitable embodiment in the present application, further, in some embodiments, in the same charging and discharging cycle process, the secondary battery satisfies one or more of the following features:

the thickness of the negative electrode plate during charging of the secondary battery is 120μm to 190μm, optionally 130μm to 190μm;

the thickness of the negative electrode plate during discharging of the secondary battery is 80μm to 180μm, optionally 100μm to 180μm;

the thickness of the positive electrode plate during charging of the secondary battery is 100μm to 130μm, optionally 120μm to 130μm;

the thickness of the positive electrode plate during discharging of the secondary battery is 110μm to 135μm, optionally 120μm to 135μm;
the total thickness of the negative electrode plate and the positive electrode plate during charging of the secondary battery is 230μm to 310μm, optionally 250μm to 310μm;
the total thickness of the negative electrode plate and the positive electrode plate during discharging of the secondary battery is 190μm to 300μm, optionally 230μm to 300μm.

The thickness of the negative electrode plate and the positive electrode can be controlled by parameters such as the coating weight and compaction density of the slurry during electrode plate manufacturing. Appropriate selection can be made according to the size and performance requirements of the electrode plate and the battery cell. It is understood that the sizes listed above are merely non-limiting examples, and the sizes of the electrode plates and battery cells in the present application are not limited thereto.

One or more parameters can be adjusted, including the thickness of the negative electrode plate during charging of the secondary battery, the thickness of the negative electrode plate during discharging of the secondary battery, the thickness of the positive electrode plate during charging of the secondary battery, the thickness of the positive electrode plate during discharging of the secondary battery, the total thickness of the negative and positive electrode plates during charging of the secondary battery, and the total thickness of the negative and positive electrode plates during secondary battery discharging. This allows for better control of the volume expansion of the electrode plates and the battery cell, and is more conducive to suppressing the volume expansion of the expandable negative electrode plate (such as silicon-containing negative electrode plate) and the corresponding battery cell. This enables secondary batteries with expandable negative electrode plates (such as silicon-containing negative electrode plates) to have both high energy density and long cycle life.

Based on any suitable embodiment in the present application, further, in some embodiments, in the same charging and discharging cycle process, the charging and discharging cycle temperature is 25°C to 30°C (further the charging and discharging cycle temperature as described above, such as 25°C);
optionally, the charge/discharge rate is 0.33 to 0.5C (further the charge/discharge rate as described above, such as 0.33C, 1/3 C, 0.5C).

Based on any suitable embodiment in the present application, further, in some embodiments, the negative electrode active material includes a silicon-based material. Without limitation, the silicon-based material may include one or more of elemental silicon, silicon oxide materials, silicon-carbon materials, silicon-nitrogen compounds, and silicon alloys. Further, the silicon-based material may include one or more of elemental silicon, a silicon oxide material and a silicon-carbon material.

Based on any suitable embodiment in the present application, further, in some embodiments, the silicon-based material comprises one or more of oxide silicon materials (denoted as $SiO_x$) and silicon-carbon materials. This is equivalent to saying that the silicon-based material comprises at least one of the oxide silicon material and the silicon-carbon material.

When the negative electrode active material contains silicon-based materials, the type of silicon-based material in the negative electrode active material can be selected according to the requirements of volume expansion control and energy density in the negative electrode plate. For example, the silicon-based material can include, but is not limited to, one or more of elemental silicon, silicon oxide materials, silicon-carbon materials, silicon-nitrogen compounds and silicon alloys; further, for example, the silicon-based material can include, but is not limited to, one or more of silicon oxide materials and silicon-carbon materials. Due to the free expansion of Si grains during the silicon phase transition, the volume change is large, and ordinary milled micron-sized silicon materials will produce a certain degree of expansion. $SiO_x$ materials can buffer some of the expansion of Si grains through silicon dioxide ($SiO_2$) or silicate materials. Silicon-carbon materials can reduce the expansion of silicon materials by pre-cutting templates to allow for internal expansion space.

Based on any suitable embodiment in the present application, further, in some embodiments, the silicon-based material comprises one or more of pre-lithiated oxide silicon materials and pre-lithiated silicon-carbon materials.

Based on any suitable embodiment in the present application, further, in some embodiments, the silicon-based material is either pre-lithiated or not pre-lithiated.

The silicon-based materials involved in the present application may be pre-lithiated or not pre-lithiated. When using pre-lithiated silicon-based materials, the initial irreversible capacity loss can be minimized, and the loss of active ions caused by electrolyte solution decomposition and negative electrode deposition can be compensated. This helps to keep the volume expansion of the electrode plate and battery cell as close as possible to the initial setting during the use of the secondary battery, thereby minimizing the stress on the binder caused by electrode plate expansion and also minimizing the damage to the conductive network in the negative electrode plate.

Based on any suitable embodiment in the present application, further, in some embodiments, the negative electrode active material layer includes carbon nanotubes.

Based on any suitable embodiment in the present application, further, in some embodiments, the negative

electrode active material layer includes silicon-based materials and carbon nanotubes.

Based on any suitable embodiment in the present application, further, in some embodiments, the carbon nanotubes comprise one or more of single-walled carbon nanotubes and multi-walled carbon nanotubes; further optionally, the carbon nanotubes comprise single-walled carbon nanotubes.

Based on any suitable embodiment in the present application, further, in some embodiments, the weight percentage of the carbon nanotubes in the negative electrode active material layer is 0.02% to 1.0%, further optionally 0.05% to 0.5%. The weight percentage of the carbon nanotubes in the negative electrode active material layer can be any of the following percentages or selected from intervals consisting of any two of the following percentages: 0.02%, 0.04%, 0.05%, 0.06%, 0.065%, 0.07%, 0.08%, 0.09%, 1.0%, etc.

Carbon nanotubes can be used as conductive agents for negative electrode plates. Their aspect ratio can reduce or avoid poor contact of negative electrode active materials caused by the expansion of negative electrode materials (such as silicon expansion), thereby reducing the damage to the conductive network of negative electrode plates due to negative electrode material expansion (such as silicon expansion), improving the stability of negative electrode plates and battery cells, and benefiting long battery cycle life. Carbon nanotubes may include one or more of single-walled carbon nanotubes and multi-walled carbon nanotubes. Among them, single-walled carbon nanotubes have a better aspect ratio, which can significantly reduce the volume expansion of the negative electrode plate and thus reduce the expansion of the battery cell.

In some embodiments, a secondary battery is provided, which comprises a positive electrode plate and a negative electrode plate; the negative electrode plate comprises a negative electrode active material layer, the negative electrode active material layer comprises a negative electrode active material, a binder and a conductive agent, and the negative electrode active material includes a silicon-based material; the positive electrode plate comprises a positive electrode active material layer, the positive electrode active material layer comprises a positive electrode active material, a binder and a conductive agent; the conductive agent includes carbon nanotubes, and the weight percentage of the carbon nanotubes in the negative electrode active material layer is 0.02% to 1.0%.

In the same charging and discharging cycle process, the volume ratio of the negative electrode plate during charging and discharging of the secondary battery is denoted as R, and R is 1.1 to 1.5, and the volume ratio of the positive electrode plate during charging and discharging of the secondary battery is denoted as Y, and Y is 0.9 to 0.98.

The weight percentage of the silicon-based material in the negative electrode active material is denoted as X, and X satisfies $3\% \leq X \leq 40\%$;

optionally, $0.8 \leq R/(1.05 \cdot X+(1-X) \cdot 1.4) \leq 1.2$.

To address negative electrode expansion, the positive electrode plate can be made to provide a certain range of opposite volume changes based on a certain Y value range. Under the condition that the overall expansion at the battery cell level is acceptable, a certain R value can be selected. This R value can be mainly adjusted by the silicon content X, and can also be further combined with a certain correction coefficient $R/(1.05 \cdot X+(1-X) \cdot 1.4)$ to take into account both energy density and appropriate expansion of the negative electrode plate. Furthermore, based on the synergistic effect of R, X, and Y in regulating electrode plate expansion and battery cell expansion, a certain amount of carbon nanotubes can be introduced other than the negative electrode active material in the negative electrode active material layer. The aspect ratio characteristics of carbon nanotubes can be used to improve the electrical contact inside the expandable electrode plate of the negative electrode, thereby suppressing the deterioration of the battery cycling performance and the battery cycle life caused by silicon expansion, and improving the overall performance of the secondary battery in terms of energy density and cycle life.

Based on any suitable embodiment in the present application, further, in some embodiments, the negative electrode active material includes a silicon-based material, and the negative electrode active material further comprises one or more of the following materials: carbon-based materials, tin-based materials, and lithium titanate; the carbon-based material may include, but is not limited to, one or more of graphite materials, soft carbon, and hard carbon. The graphite material may include one or more of artificial graphite and natural graphite.

Without limitation, the negative electrode active material can include silicon-based materials and carbon-based materials. In the negative electrode active material, the total mass of silicon-based materials and carbon-based materials may account for 80% to 100% of the mass of the negative electrode active material, further optionally 90% to 100%, and even further optionally 100%.

Without limitation, the negative electrode active material can include silicon-based materials and graphite materials. In the negative electrode active material, the total mass of silicon-based materials and graphite materials may account for 80% to 100% of the mass of the negative electrode active material, further optionally 90% to 100%, and even further optionally 100%.

When the negative electrode active material contains silicon-based materials, the remaining parts of the negative electrode active material other than the silicon-based materials do not need to be specifically limited. When the graphite material is used, the material is more readily available.

Based on any suitable embodiment in the present application, further, in some embodiments, the secondary battery is a lithium-ion secondary battery. The charging and discharging process of the lithium-ion secondary battery is

implemented using the intercalation and deintercalation of lithium ions in the electrodes and the transport of lithium ions in an electrolyte. Generally, active ions in the lithium-ion secondary battery are, but are not limited to, the lithium ions.

Based on any suitable embodiment in the present application, further, in some embodiments, the positive electrode plate comprises a positive electrode active material layer, the positive electrode active material layer comprises a positive electrode active material; the positive electrode active material comprises one or more of ternary materials and modified ternary materials, wherein the modified ternary material is a ternary material containing a modifying element, the modifying element exists as a doping element, as a coating element, or as a combination of doping elements and coating elements. In the present application, unless otherwise specified, "ternary material" and "ternary positive electrode material" have the same meaning and can be used interchangeably; unless otherwise specified, "modified ternary material" and "modified ternary positive electrode material" have the same meaning and can be used interchangeably. Unless otherwise specified, "doping element" in the positive electrode active material refers to modifying elements doped in the positive electrode active material; unless otherwise specified, "coating element" in the positive electrode active material means that the positive electrode active material comprises the positive electrode active particle body and the coating layer located on at least a portion of the surface of the positive electrode active particle body, wherein the coating element is the modifying element located in the coating layer. As a non-limiting example, in the positive electrode active material, "the modifying elements exist in a combination of doping elements and coating elements" means that the positive electrode active material comprises the positive electrode active particle body and a coating layer located at least a portion of the surface of the positive electrode active particle body. At least a portion of the modifying elements are doped into the positive electrode active material body, and at least a portion of the modifying elements are also contained in the coating layer. The positive electrode active particle body can be a ternary positive electrode material, or a modified ternary positive electrode material, but is not limited to these.

Without limitation, the positive electrode active material can include one or more of NCM ternary materials, NCA ternary materials, modified NCM ternary materials, and modified NCA materials; wherein the modified NCM ternary material is an NCM ternary material containing the modifying element, and the modified NCA ternary material is an NCA ternary material containing the modifying element.

In the field of secondary battery technology, "NCM ternary material" usually refers to lithium nickel cobalt manganese oxide materials, while "NCA ternary material" usually refers to lithium nickel cobalt aluminum oxide materials. NCM ternary materials, NCA ternary materials, modified NCM ternary materials, and modified NCA materials are commonly used as positive electrode active materials.

Without limitation, the modifying element in the modified ternary material comprises one or more of Na, K, Ca, Ba, Sb, Ti, Zr, W, Sr, Nb, Mo, Si, Mg, B, Cr and Ta.

Without limitation, the chemical formula of the positive electrode active material is $Li_x(Ni_aCo_bM_cM'_d)O_{2-e}$ (a nickel-containing lithium oxide), where $0.6 \leq x \leq 1.2$, $0<a<1$, $0<b<1$, $0<c<1$, $0<d<1$, $a+b+c+d=1$, $-0.1 \leq e \leq 0.1$, M can include at least one of Mn and Al, and M' can include one or more of Na, K, Ca, Ba, Sb, Ti, Zr, W, Sr, Nb, Mo, Si, Mg, B, Cr and Ta; further optionally, $a \geq 0.8$; more further optionally, $0.8 \leq a<1$; even more further optionally, $0.9 \leq a<1$. Further, a can be any of the following values, or it can be greater than or equal to any of the following values and less than 1, or it can be selected from intervals consisting of any two of the following values: 0.6, 0.7, 0.71, 0.8, 0.83, 0.85, 0.86, 0.88, 0.90, 0.91, 0.92, 0.93, 0.94, 0.95, etc. Without limitation, a can be selected from any suitable range of the following ranges: $a \geq 0.6$, $0.61 \leq a<1$, $a \geq 0.7$, $a \geq 0.71$, $0.7 \leq a<1$, $0.71 \leq a<1$, $a \geq 0.9$, etc. Without limitation, x can also be any of the following values, or it can be greater than or equal to any of the following values and less than 1, or it can be selected from intervals consisting of any two of the following values: 0.6, 0.64, 0.65, 0.67, 2/3, 0.7, 0.75, 0.8, 0.83, 0.84, 0.85, 0.86, 0.88, 0.90, 0.91, 0.92, 0.93, 0.94, 0.95, 0.98, 1, 1.02, 1.05, 1.1, 1.15, 1.2, etc. Without limitation, x can be selected from any suitable range of the following ranges: 0.9-1.1, 0.95-1.05, 0.98-1.02, etc.

For secondary batteries with active ions including lithium ions, the above definition of x includes the molar content of Li in different charging and discharging states of the battery (generally, the battery voltage is 2-5V). It is understandable that the battery will be accompanied by deintercalation and consumption of lithium (Li) during charging and discharging, and the content of Li in the positive electrode plate is different when the battery is discharged to different states.

In the exemplary description of the positive electrode active material in the present application, the Li content can be the initial state of the material (e.g., a is selected from 0.9 to 1.1, further such as a=1). The positive electrode active material is applied to the positive electrode plate in the battery system, and after charging and discharging cycles, the content of Li in the positive electrode active material contained in the positive electrode plate generally will change. The content of Li may be measured using, but not limited to, the molar content. Regarding "the content of Li is the initial state of the material", the initial state of the material refers to the state before the material is added to the positive electrode slurry. It is understandable that a new material or new substance obtained by appropriate modification on the basis of the enumerated positive electrode material is also within the scope of the positive electrode active material. The aforementioned appropriate modification refers to an acceptable modification mode for the positive electrode active material, and a non-limiting example thereof is, e.g., coating modification.

In the nickel-containing lithium oxide, the total atomic stoichiometry of non-lithium and non-oxygen elements is

taken as 1, the atomic stoichiometry of nickel element is denoted as n, which can also be called nickel content. Numerically, in the above-mentioned nickel-containing lithium oxides, n equals a.

Unless otherwise specified, the nickel content n can be tested using the following method: disassemble the battery cell to obtain the positive electrode plate, use solvent washing, ultrasonic dispersion and other methods to obtain the positive electrode active material from the positive electrode active material layer, and use inductively coupled plasma (ICP) to test the atomic ratio of Ni, Co and M elements in the positive electrode active material, and then calculate the atomic percentage of nickel relative to Ni, Co and M elements, which is denoted as n.

Suitable positive electrode active materials can be selected, which, on the one hand, can adjust the volume change of the positive electrode plate in the charging and discharging states, and on the other hand, can improve the performance of the positive electrode plate as required. For example, ternary active materials or their modified materials can be selected. The positive electrode active materials can be modified by doping and/or coating.

Based on any suitable embodiment in the present application, further, in some embodiments, the positive electrode plate comprises a positive electrode active material layer, the positive electrode active material layer comprises a positive electrode active material, the positive electrode active material comprises a nickel-containing lithium oxide; in the nickel-containing lithium oxide, the total atomic stoichiometry of non-lithium and non-oxygen elements is taken as 1, the atomic stoichiometry of nickel element is denoted as n, $n \geq 0.7$; optionally, $n \geq 0.71$; further optionally, $n \geq 0.8$; even further optionally, $0.8 \leq n < 1$; even further optionally, $0.9 \leq n < 1$.

When the positive electrode active material contains a nickel-containing lithium oxide, the expansion and shrinkage behavior of the positive electrode plate in the charging and discharging cycle process can be adjusted by regulating the nickel content, which can be used to adjust the Y value.

Based on any suitable embodiment in the present application, further, in some embodiments, the positive electrode plate comprises a positive electrode active material layer, the positive electrode active material layer comprises a positive electrode active material, the positive electrode active material comprises a nickel-containing lithium oxide; in the nickel-containing lithium oxide, the total atomic stoichiometric number of non-lithium and non-oxygen elements is taken as 1, the atomic stoichiometric number of nickel element is denoted as n, and the positive electrode plate satisfies $Y \leq 1.14-0.2n$.

Based on any suitable embodiment in the present application, further, in some embodiments, the positive electrode plate comprises a positive electrode active material layer, the positive electrode active material layer comprises a positive electrode active material, the positive electrode active material comprises a nickel-containing lithium oxide; in the nickel-containing lithium oxide, the total atomic stoichiometry of non-lithium and non-oxygen elements is taken as 1, the atomic stoichiometry of nickel element is denoted as n, the positive electrode plate satisfies $Y \leq 1.14 - 0.2n$, where $n \geq 0.8$; optionally, $0.8 \leq n < 1$; further optionally, $0.9 \leq n < 1$.

By jointly regulating the volume ratio Y of the positive electrode plate during charging and discharging of the secondary battery and the nickel content through the relational expression $Y \leq 1.14-0.2n$, it is more conducive to increasing the battery capacity while controlling an appropriate nickel content, thereby enabling the Y value of the positive electrode plate to have a more suitable range. This is more conducive to regulating the shrinkage-expansion matching of the positive electrode plate and the expandable negative electrode plate (such as silicon-containing negative electrode plate), and better inhibiting the deterioration of the battery cycling performance and the battery cycle life due to the expansion of the negative electrode material (such as silicon expansion).

Based on any suitable embodiment in the present application, further, in some embodiments, the positive electrode plate satisfies $n \geq 0.8$; optionally, $0.8 \leq n < 1$; further optionally, $0.9 \leq n < 1$. Further, n can be any of the following values, or it can be greater than or equal to any of the following values and less than 1, or it can be selected from intervals consisting of any two of the following values: 0.6, 0.7, 0.71, 0.8, 0.83, 0.85, 0.86, 0.88, 0.90, 0.91, 0.92, 0.93, 0.94, 0.95, etc. Also, n can be expressed as a percentage. For example, it is 80%, 90%, 95%, etc. Without limitation, n can be selected from any suitable range of the following ranges: $n \geq 0.6$, $0.61 \leq n < 1$, $n \geq 0.7$, $n \geq 0.71$, $0.7 \leq n < 1$, $0.71 \leq n < 1$, $n \geq 0.9$, etc.

When the positive electrode plate of the secondary battery is rich in nickel, in the charging state, in response to the aforementioned problems caused by the expansion of the negative electrode plate, the nickel-rich positive electrode plate can not only regulate the overall battery cell expansion through the volume shrinkage caused by the deintercalation of active ions, but also endow the secondary battery with high capacity and low cycle fading.

Based on any suitable embodiment in the present application, further, in some embodiments, the secondary battery comprises an electrolyte solution; the electrolyte solution comprises a lithium salt and a solvent.

Based on any suitable embodiment in the present application, further, in some embodiments, the lithium salt comprises lithium bis(fluorosulfonyl)imide and lithium hexafluorophosphate.

Based on any suitable embodiment in the present application, further, in some embodiments, the percentage of the weight of lithium bis(fluorosulfonyl)imide relative to the sum of the weights of lithium bis(fluorosulfonyl)imide and lithium hexafluorophosphate in the electrolyte solution is denoted as $W_{FSI}$, $W_{FSI}$ is 10% to 80%; further optionally, $W_{FSI}$ is 20% to 80%; and even more optionally, $W_{FSI}$ is 30% to 70%. $W_{FSI}$ can also be any of the following percentages or be selected from intervals consisting of any two of the following percentages: 10%, 12.5%, 15%, 20%, 25%, 30%, 35%, 40%, 50%, 60%,

70%, 75%, 80%, etc.

The expansion of the electrode plate and the battery cell can also be regulated by adjusting the type and content of lithium salt in the electrolyte solution. For example, for nickel-containing positive electrode, when the lithium salt comprises lithium hexafluorophosphate ($LiPF_6$), the strong oxidizing properties may cause the $LiPF_6$electrolyte solution to generate HF, leading to various side reactions and deteriorating battery performance. By introducing lithium bis(fluorosulfonyl)imide (LIFSI), the side reactions can be significantly reduced, thereby reducing the irreversible expansion of the positive and negative electrodes, and thus reducing the overall expansion of the battery.

Based on any suitable embodiment in the present application, further, in some embodiments, the secondary battery includes an electrolyte solution; the electrolyte solution includes an additive, and the additive includes fluoroethylene carbonate, wherein the weight percentage of fluoroethylene carbonate in the electrolyte solution is recorded as $W_{FEC}$; optionally, the secondary battery satisfies $W_{FEC}/X \geq 0.3$. Here, X is the silicon content defined above, which is the weight proportion of silicon-based materials in the negative electrode active material. Without limitation, the lithium salt in the electrolyte may include lithium bis(fluorosulfonyl)imide and lithium hexafluorophosphate, wherein the content of lithium bis(fluorosulfonyl)imide and lithium hexafluorophosphate may also refer to the foregoing definition.

The additive fluoroethylene carbonate (FEC) is a film-forming additive. FEC can reduce and generate a high-strength and high-toughness SEI film on the surface of negative electrode materials (such as silicon-containing materials), which is mainly composed of LiF and supplemented by high molecular weight oligomers. This can inhibit the erosion of negative electrode active particles (such as silicon-containing particles) by electrolyte solution, effectively reduce side reactions on the surface of negative electrode materials (such as silicon-containing materials), and reduce the consumption of active lithium. Therefore, FEC has the function of reducing the expansion of negative electrode plates with expandable negative electrode materials (such as the expansion of silicon-containing negative electrodes) and improving the cycling performance of batteries. Further coordinating the amount of FEC used with the silicon content in the negative electrode can better leverage the role of FEC. This can be controlled by the relational expression between the weight percentage of FEC in the electrolyte solution ($W_{FEC}$) and the silicon content (X) ($W_{FEC}/X$). For example, $W_{FEC}/X$ can be adjusted to $\geq 0.3$. For example, $W_{FEC}/X$ can be adjusted to $\geq 0.3$. In this case, more FEC can be provided, allowing the FEC to function for a longer period of time. This can better reduce or avoid problems that may arise after the high-quality SEI on the silicon surface is damaged, such as potentially leading to a large consumption of active lithium or even causing a drop in the cycle.

Based on any suitable embodiment in the present application, further, in some embodiments, the lithium salts lithium bis(fluorosulfonyl)imide and lithium hexafluorophosphate constitute a composite lithium salt, and the electrolyte solution also contains the additive FEC; in this case, it is beneficial to constructing a more stable SEI film, more beneficial to reducing the occurrence of side reactions, reducing the thickening rate of SEI, and can more effectively reduce the irreversible expansion of the expansive negative electrode (such as silicon-containing negative electrode), thereby achieving a more effective reduction in the expansion force of batteries (such as silicon-containing batteries) including expansive negative electrodes.

Based on any suitable embodiment in the present application, further, in some embodiments, the R value of the negative electrode plate is $\leq 1.5$, the Y value of the positive electrode plate is $\leq 0.98$, and the electrolyte solution includes a lithium salt, which is a non-composite lithium salt composed of lithium bis(fluorosulfonyl)imide and lithium hexafluorophosphate, and the electrolyte solution also contains the additive FEC. Through the above-mentioned synergistic combination design, the expansion of the electrode plate of the expandable negative electrode (such as silicon-containing negative electrode) can be effectively reduced, the stability of the negative electrode plate can be improved, and the expansion of the battery cell including the expandable negative electrode plate (such as silicon-containing battery cell) can be cleverly reduced, thereby improving the life of the battery cell. The parameters mentioned above can also be selected from other examples herein, or combined with other parameters herein in a suitable manner.

In an embodiment of the present application, the secondary battery includes a positive electrode plate, a negative electrode plate, an electrolyte, and a separator. During charge-discharge of the battery, the active ions are intercalated and deintercalated back and forth between the positive electrode plate and the negative electrode plate. The electrolyte serves for conducting the active ions between the positive electrode plate and the negative electrode plate. The separator is provided between the positive electrode plate and the negative electrode plate, and mainly functions to prevent a short circuit between the positive electrode and the negative electrode while allowing active ions to pass through.

Negative electrode plate

The negative electrode plate in the secondary battery provided in the present application includes a negative electrode active material layer, and the negative electrode active material layer includes a negative electrode active material. In some embodiments of the present application, the negative electrode active material includes a silicon-based material. The definition of the silicon-based material can be found above. Without limitation, the silicon-based material may include one or more of elemental silicon, a silicon-oxygen compound (i.e., silicon oxide material), a silicon-carbon

composite (i.e., silicon-carbon material), a silicon-nitrogen composite, and a silicon alloy. The type and content of the silicon-based material can also be defined as described above. Further, the silicon-based material may include one or more of elemental silicon, a silicon oxide material and a silicon-carbon material. Still further, the silicon-based material may include one or more of a silicon oxide material and a silicon-carbon material.

The volume ratio R of the negative electrode plate during the charging and discharging of the secondary battery in the same charge-discharge cycle may refer to the above definition or examples below.

In some embodiments, in addition to the expansive negative electrode active material (such as silicon-based material), the negative electrode active material may also include other negative electrode active materials known in the art for use in batteries. As a non-limiting example, the negative electrode active material includes a silicon-based material, and other negative electrode active materials may include one or more of the following materials: a carbon-based material (such as a graphite material (such as artificial graphite, natural graphite), soft carbon, hard carbon, etc.), a tin-based material, lithium titanate, etc. The carbon-based material may include one or more of graphite materials, soft carbon, and hard carbon. The graphite material may include one or more of artificial graphite and natural graphite. The tin-based material may include one or more of elemental tin, a tin oxide, and a tin alloy. However, the present application is not limited to these materials, and other conventional materials useful as negative electrode active materials for batteries can also be used, as long as the negative electrode active materials contain expansive negative electrode active materials (such as a silicon-based material). These negative electrode active materials may use a silicon-based material alone as high-expansion negative electrode active materials, or they may use two or more negative electrode active materials in combination (in which case at least one silicon-based material can be included). "Two or more" means that the number of types is ≥2.

Typically, in the negative electrode active material layer, the mass percentage content of the negative electrode active material can satisfy ≥70%, further satisfy ≥80%, and even further satisfy ≥90%.

Based on any suitable embodiment in the present application, further, in some embodiments, the negative electrode plate includes a negative electrode current collector and a negative electrode active material layer provided on at least one side of the negative electrode current collector, and the negative electrode active material layer includes a negative electrode active material. The negative electrode active material may be as defined above.

As a non-limiting example, the negative electrode current collector has two surfaces opposite in its own thickness direction, and the negative electrode active material layer is arranged on any one or both of the two opposite surfaces of the negative electrode current collector.

Based on any suitable embodiment in the present application, further, in some embodiments, the negative electrode plate includes a negative electrode current collector and a negative electrode film layer arranged on at least one surface of the negative electrode current collector, the negative electrode film layer includes a negative electrode active material layer, and the negative electrode active material layer includes a negative electrode active material. The negative electrode active material may be as defined above.

In the present application, the term "on the surface" means that direct contact is possible, but is not limited to that.

As a non-limiting example, the negative electrode current collector has two surfaces opposite in its own thickness direction, and the negative electrode film layer is arranged on any one or both of the two opposite surfaces of the negative electrode current collector.

Based on any suitable embodiment in the present application, further, in some embodiments, the negative electrode current collector can be a metal foil or a composite current collector. For example, as the metal foil, a copper foil can be used. The composite current collector may comprise a high molecular material substrate layer and a metal layer formed on at least one surface of a high molecular material substrate. The composite current collector may be obtained by forming a metal material on the high molecular material substrate. In the negative electrode current collector, non-limiting examples of the metal material may include one or more of copper, a copper alloy, nickel, a nickel alloy, titanium, a titanium alloy, silver, and a silver alloy, etc. In the negative electrode current collector, non-limiting examples of the high molecular material substrate may include one or more of substrates, such as polypropylene (PP), polyethylene terephthalate (PET), polybutylene terephthalate (PBT), polystyrene (PS), polyethylene (PE), etc.

Based on any suitable embodiment in the present application, further, in some embodiments, the negative electrode active material layer further optionally includes a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). An example of a PAA binder is, for example, polyacrylic acid (PAA).

Based on any suitable embodiment in the present application, further, in some embodiments, the binder in the negative electrode film layer or the negative electrode active material layer comprises one or more of PAA binder and SBR binder.

In the negative electrode active material layer, the mass percentage content of the binder may be 0-30%, further be 0-20%, and even further be 0-10%. Typically, in the negative electrode active material layer, the mass percentage content of the binder be 1% to 5%, and even further be 1% to 3%.

Based on any suitable embodiment in the present application, further, in some embodiments, the negative electrode film layer further optionally includes a conductive agent. Based on any suitable embodiment in the present application, further, in some embodiments, the negative electrode active material layer optionally includes a conductive agent. The conductive agent may include one or more of superconducting carbon, acetylene black, carbon black, Ketjen black, carbon dot, carbon nanotube, graphene, and carbon nanofiber. In the negative electrode active material layer, the mass percentage content of the conductive agent may be 0-15%, and further optionally be 0-10%. Typically, in the negative electrode active material layer, the mass percentage content of the conductive agent may be 0-5%, optionally be 0-3%, and further optionally be 0-1%.

Based on any suitable embodiment in the present application, further, in some embodiments, the conductive agent includes carbon nanotubes. Further, the carbon nanotubes may include one or more of single-walled carbon nanotubes and multi-walled carbon nanotubes; further optionally, the carbon nanotubes comprise single-walled carbon nanotubes.

In some embodiments, the weight percentage of the carbon nanotubes in the negative electrode active material layer is 0.02% to 1.0%, further optionally 0.05% to 0.5%. The weight percentage of the carbon nanotubes in the negative electrode active material layer can be any of the following percentages or selected from intervals consisting of any two of the following percentages: 0.02%, 0.03%, 0.04%, 0.05%, 0.06%, 0.065%, 0.07%, 0.08%, 0.09%, 1.0%, etc.

Based on any suitable embodiment in the present application, further, in some embodiments, the negative electrode active material layer further optionally includes other adjuvants, such as a thickener. Non-limiting examples of the thickener may include, e.g., sodium carboxymethyl cellulose (CMC-Na). Typically, in the negative electrode active material layer, the mass percentage content of the thickener may be 0-5%, optionally be 0-3%, and further optionally be 0-1%.

Based on any suitable embodiment in the present application, further, in some embodiments, the negative electrode plate may be prepared by: dispersing the above components, such as the negative electrode active material, the conductive agent, the binder, and any other component, for preparing the negative electrode plate in a solvent (a non-limiting example of the solvent is, for example, deionized water) to form a negative electrode slurry; and coating the negative electrode slurry on at least one side surface of the negative electrode current collector, followed by processes, such as oven-drying and compaction (the compaction may be implemented by cold pressing), to provide the negative electrode plate. The any other component may or may not be added, such as the other optional adjuvants mentioned above. The negative electrode slurry may be applied on a single surface of the negative electrode current collector or on both surfaces of the negative electrode current collector. The solid content of the negative electrode slurry can be 40wt% to 60wt%. The compacted density of the negative electrode plate can be 1.0 g/cm$^3$ to 1.8 g/cm$^3$.

In the present application, wt% represents weight percentage.

The "compacted density" used in the present application has a well-known meaning in the art and is one of the reference indicators of energy density of a material. In the present application, unless otherwise specified, the compacted density of an electrode plate refers to a ratio of mass of an active material layer to its volume. The compacted density of the positive electrode plate refers to a ratio of mass of the positive electrode active material layer to its volume, and the compacted density of the negative electrode plate refers to a ratio of mass of the negative electrode active material layer to its volume. The compacted density can be obtained by conventional testing in the art.

Unless otherwise stated in the present application, for both positive and negative electrode plates, the change in electrode plate area before and after cold pressing is not significant, and the corresponding formula for calculating the compaction density can be:

Compacted density = coating areal density / (thickness of electrode plate after cold pressing - thickness of current collector);

Coating areal density = dry weight of slurry / electrode plate area during coating.

Based on any suitable embodiment in the present application, further, in some embodiments, the negative electrode active material layer includes a negative electrode active material, a binder and a conductive agent.

The selected R value can be achieved by adjusting the negative electrode active material, binder, and conductive agent in the negative electrode active material layer.

Positive electrode plate

In the present application, the positive electrode plate includes a positive electrode current collector and a positive electrode active material layer disposed on at least one side of the positive electrode current collector. The positive

electrode active material layer includes a positive electrode active material.

As a non-limiting example, the positive electrode current collector has two surfaces opposite in its own thickness direction, and the positive electrode active material layer is arranged on any one or both of the two opposite surfaces of the positive electrode current collector.

In the present application, the positive electrode plate includes a positive electrode current collector and a positive electrode film layer arranged on at least one surface of the positive electrode current collector, the positive electrode film layer includes a positive electrode active material layer, and further, the positive electrode active material layer includes a positive electrode active material.

The volume ratio Y of the positive electrode plate during the charging and discharging of the secondary battery in the same charge-discharge cycle may refer to the above definition.

As a non-limiting example, the positive electrode current collector has two surfaces opposite in its own thickness direction, and the positive electrode film layer is arranged on any one or both of the two opposite surfaces of the positive electrode current collector.

Based on any suitable embodiment in the present application, further, in some embodiments, the positive electrode current collector can be a metal foil or a composite current collector. For example, as the metal foil, an aluminum foil can be used. The composite current collector may comprise a high molecular material substrate layer and a metal layer formed on at least one surface of the high molecular material substrate layer. The composite current collector may be formed by forming a metal material on a high molecular material substrate; the metal material may include one or more of aluminum, an aluminum alloy, nickel, a nickel alloy, titanium, a titanium alloy, silver, and a silver alloy; and non-limiting examples of the high molecular material substrate include a substrate of polypropylene (PP), polyethylene terephthalate (PET), polybutylene terephthalate (PBT), polystyrene (PS), polyethylene (PE), or the like.

Based on any suitable embodiment in the present application, further, in some embodiments of the present application, the positive electrode active material includes a lithium-ion material; and further, the secondary battery is a lithium-ion secondary battery.

Based on any suitable embodiment in the present application, further, in some embodiments of the present application, the secondary battery is a lithium-ion secondary battery. The charge-discharge process of the lithium-ion secondary battery is implemented using the intercalation and deintercalation of lithium ions in the electrodes and the transport of lithium ions in an electrolyte. Generally, active ions in the lithium-ion secondary battery are, but are not limited to, the lithium ions.

A positive electrode active material for a battery well known in the art may be used as the positive electrode active material. As a non-limiting example, the positive electrode active material may include one or more of the following materials or substances: a lithium-transition metal oxide of olivine structure and a respective modified compound thereof. However, the present application is not limited to these materials or substances, and other conventional materials or substances that may be used as positive electrode active materials of batteries may also be used. Only one of these positive electrode active materials may be used alone, or more than two thereof may be used in combination. Non-limiting examples of the lithium-transition metal oxide may include, but are not limited to, one or more of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and a modified compound thereof. Non-limiting examples of the lithium-cobalt oxide include $LiCoO_2$; non-limiting examples of the lithium-nickel oxide include $LiNiO_2$; non-limiting examples of the lithium-manganese oxide include, e.g., $LiMnO_2$ or $LiMn_2O_4$; and non-limiting examples of the lithium-nickel-cobalt-manganese oxide include, e.g., $LiNi_{1/3}Co_{1/3}Mn_{1/3}O_2$ (or abbreviated as $NCM_{333}$), $LiNi_{0.5}Co_{0.2}Mn_{0.3}O_2$ (or abbreviated as $NCM_{523}$), $LiNi_{0.5}Co_{0.25}Mn_{0.25}O_2$ (or abbreviated as $NCM_{211}$), $LiNi_{0.6}Co_{0.2}Mn_{0.2}O_2$ (or abbreviated as $NCM_{622}$), or $LiNi_{0.8}Co_{0.1}Mn_{0.1}O_2$ (or abbreviated as $NCM_{811}$). Non-limiting examples of the lithium-nickel-cobalt-aluminum oxide include $LiNi_{0.85}Co_{0.15}Al_{0.05}O_2$ and $LiNi_{0.8}Co_{0.15}Al_{0.05}O_2$.

Based on any suitable embodiment in the present application, further, in some embodiments, the positive electrode active material may include, but is not limited to, one or more of the following materials: a lithium-cobalt oxide, a lithium-nickel oxide, a lithium-manganese oxide, a lithium-nickel-manganese oxide, a lithium-nickel-cobalt-manganese oxide, a lithium-nickel-cobalt-aluminum oxide, a sodium oxide, and a potassium oxide, and a material composed of any one of the above substances and a doping element; and further, the doping element in any one of the positive electrode active materials independently comprises one or more of a transition metal element and a non-transition metal element.

The types of the positive electrode active materials may also refer to the definitions above or the examples below.

Typically, in the positive electrode active material layer, the mass percentage content of the positive electrode active material can satisfy ≥80%, and further satisfy ≥90%.

Based on any suitable embodiment in the present application, further, in some embodiments of the present application, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In the positive electrode active material

layer, the mass percentage content of the binder may be 0-20%, and may further be 0-10%. Typically, in the positive electrode active material layer, the mass percentage content of the binder may be 1% to 5%, and may further be 1% to 3%.

Based on any suitable embodiment in the present application, further, in some embodiments of the present application, the positive electrode active material layer further optionally includes a conductive agent. As a non-limiting example, the conductive agent may include one or more of superconducting carbon, acetylene black, carbon black, Ketjen black, carbon dot, carbon nanotube, graphene, and carbon nanofiber. In the positive electrode active material layer, the mass percentage content of the conductive agent may be 0-20%, and may further be 0-10%. Typically, in the positive electrode active material layer, the mass percentage content of the conductive agent may be 0.5% to 3%, and is further optionally 1% to 2%.

Based on any suitable embodiment in the present application, further, in some embodiments of the present application, the positive electrode active material layer further optionally includes other adjuvants.

Based on any suitable embodiment in the present application, further, in some embodiments, the positive electrode plate may be prepared by: dispersing the above components, such as the positive electrode active material, the conductive agent, the binder, and any other component, for preparing the positive electrode plate in a solvent to form a positive electrode slurry; and coating the positive electrode slurry on at least one side surface of the positive electrode current collector, followed by processes, such as oven-drying and compaction (the compaction may be implemented by cold pressing), to provide the positive electrode plate. The any other component may or may not be added. The type of the solvent may be selected from, but is not limited to, any one in the above embodiments, such as N-methylpyrrolidone (NMP). The positive electrode slurry may be applied on a single surface of the positive electrode current collector or on both surfaces of the positive electrode current collector. The solid content of the positive electrode slurry may be 40wt% to 80wt%. The compacted density of the positive electrode plate may be 3.0-3.6 $g/m^3$, optionally 3.3 -3.5 $g/m^3$.

Based on any suitable embodiment in the present application, further, in some embodiments, the positive electrode plate includes a positive electrode active material layer, and the positive electrode active material layer includes a positive electrode active material, a binder and a conductive agent.

The selected Y value can be achieved by adjusting the positive electrode active material, binder, and conductive agent in the positive electrode active material layer.

Given that a suitable R value and Y value have been selected based on the teachings of the present application, those skilled in the art can achieve the selected R value and Y value by adjusting one or more of the types and contents of the aforementioned components.

Electrolyte

The electrolyte serves for conducting the active ions between the positive electrode plate and the negative electrode plate. In the present application, the electrolyte includes an electrolyte solution.

Based on any suitable embodiment in the present application, further, in some embodiments, the electrolyte is an electrolyte solution.

Based on any suitable embodiment in the present application, further, in some embodiments, the electrolyte is a non-aqueous electrolyte. The non-aqueous electrolyte may include an electrolyte salt and a solvent. The concentration of the electrolyte salt is generally 0.5-5 mol/L.

Based on any suitable embodiment in the present application, further, in some embodiments, the secondary battery is a lithium-ion secondary battery, and the electrolyte salt may include an electrolyte lithium salt.

Based on any suitable embodiment in the present application, further, in some embodiments, the electrolyte lithium salt may include one or more of lithium hexafluorophosphate ($LiPF_6$), lithium tetrafluoroborate ($LiBF_4$), lithium perchlorate ($LiClO_4$), lithium hexafluoroarsenate, lithium bis(fluorosulfonyl)imide (LiFSI), lithium bis(trifluoromethanesulfonyl)imide (LiTFSI), lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

Based on any suitable embodiment in the present application, further, in some embodiments, the electrolyte lithium salt comprises lithium bis(fluorosulfonyl)imide and lithium hexafluorophosphate. Further, as mentioned above, the percentage $W_{FSI}$ of the weight of lithium bis(fluorosulfonyl)imide relative to the sum of the weights of lithium bis(fluorosulfonyl)imide and lithium hexafluorophosphate in the electrolyte solution may be 10% to 80%; further optionally, $W_{FSI}$ is 20% to 80%; and even further optionally, $W_{FSI}$ is 30% to 70%. $W_{FSI}$ can also be any of the following percentages or be selected from intervals consisting of any two of the following percentages: 10%, 12.5%, 15%, 20%, 25%, 30%, 35%, 40%, 50%, 60%, 70%, 75%, 80%, etc.

Based on any suitable embodiment in the present application, further, in some embodiments, the solvent is a non-aqueous solvent, and further an organic solvent.

Based on any suitable embodiment in the present application, further, in some embodiments, the organic solvent is an ester or an ether. The ester solvent may include one or more of a carboxylate solvent and a carbonate solvent. In some embodiments, the organic solvent includes a carboxylate solvent, and may further be a carboxylate or a halogenated

compound thereof. The halogenated compound of the carboxylate is also a halogenated carboxylate. The carbonate solvent may be a $C_{1-3}$ alkyl ester or its halogenated compound of a $C_{2-4}$ alkyl carboxylic acid. Examples of $C_{1-4}$ alkylcarboxylic acids include acetic acid, propanoic acid, and butyric acid. Examples of $C_{1-3}$ alkyl esters of carboxylic acids include a methyl ester, an ethyl ester, and a propyl ester. The organic solvent may include a carbonate solvent, and may further include one or more of a carbonate and a halogenated carbonate. The halogenated compound of the carbonate is also a halogenated carbonate. The halogen substituent in the halogenated carboxylate and the halogenated carbonate may be fluorine, and the number of halogen substituents may be 1 to fully halogenated. Taking fluorination as an example, the number of fluorine atoms in the fluorinated carboxylate and the fluorinated carbonate may be 1 to fully fluorinated. As non-limiting examples, the organic solvent may include one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), and any of the aforementioned fluorinated compounds.

Based on any suitable embodiment in the present application, further, in some embodiments, the solvent may include one or more of ethylene carbonate (EC,

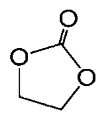

), propylene carbonate (PC,

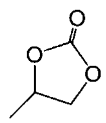

), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfolane, methyl ethyl sulfone and diethyl sulfone.

Based on any suitable embodiment in the present application, further, in some embodiments, the electrolyte solution further optionally includes an additive. For example, the additive may include a negative electrode film-forming additive and a positive electrode film-forming additive and may further include an additive that can improve certain performance of the battery, e.g., an additive that improves the overcharging performance of the battery, an additive that improves the high-temperature performance or low-temperature performance of the battery, and the like.

Based on any suitable embodiment in the present application, further, in some embodiments, the additive may include one or more of vinylene carbonate (VC,

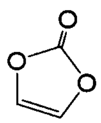

), vinyl ethylene carbonate (VEC,

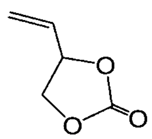

), fluoroethylene carbonate (FEC), difluoroethylene carbonate (DFEC), trifluoromethylethylene carbonate (TFPC), methylene methanedisulfonate (MMDS), 1-propylene-1,3-sultone (PST), ethylene sulfite (ES), propylene sulfite (PS), ethylene sulfate (DTD), succinonitrile (SN), adiponitrile (AND), cyclic quaternary ammonium sulfonate, tris(trimethylsilyl) phosphate (TMSP), tris(trimethylsilyl) borate (TMSB) and anisole.

Based on any suitable embodiment in the present application, further, in some embodiments, the additive includes fluoroethylene carbonate (FEC). The content of FEC in the electrolyte solution can refer to the previous text. For

example, the weight percentage of FEC in the electrolyte solution, denoted as $W_{FEC}$, can satisfy $W_{FEC}/X \geq 0.3$.

Separator

Based on any suitable embodiment in the present application, further, in some embodiments, the secondary battery further includes a separator. The type of the separator is not particularly limited in the present application, and any well-known separator having good chemical stability and mechanical stability and of a porous structure can be selected.
Based on any suitable embodiment in the present application, further, in some embodiments, the material of the separator may be one or more of glass fiber, non-woven cloth, polyethylene, polypropylene, and polyvinylidene fluoride. The separator can be either a single-layer thin film or a multi-layer composite thin film without special limitations. When the separator is a multi-layer composite thin film, the materials of the layers may be the same or different, without special limitations. A coating containing inorganic particles may also be provided on the substrate surface of the separator. As a non-limiting example, the inorganic particles may include one or more of aluminum oxide, boehmite, etc.

Electrode assembly, electrochemical energy storage apparatus, and secondary battery

Based on any suitable embodiment in the present application, further, in some embodiments, the positive electrode plate, the negative electrode plate, and the separator may be made to form an electrode assembly by a winding process or a stacking process.
Based on any suitable embodiment in the present application, further, in some embodiments, the electrochemical energy storage apparatus may include an outer package. The outer package can be used for encapsulating the above electrode assembly and electrolyte.
Based on any suitable embodiment in the present application, further, in some embodiments, the secondary battery may include an outer package. The outer package can be used for encapsulating the above electrode assembly and electrolyte.
Based on any suitable embodiment in the present application, further, in some embodiments, the outer package of the secondary battery may be a hard case, such as a hard plastic case, an aluminum case, a steel case, and the like. The outer package of the secondary battery may also be a soft package, for example, a bag-type soft package. The material of the pouch may be plastic, and further, non-limiting examples of the plastic may include one or more of polypropylene, polybutylene terephthalate, and polybutylene succinate.
The shape of the secondary battery is not particularly limited in the present application, and may be a cylinder shape, a square shape, or any other shape. For example, FIG. 1 shows a secondary battery 5 with a square structure as an example.
Based on any suitable embodiment in the present application, further, in some embodiments, referring to FIG. 2, the outer package may include a case 51 and a cover plate 53. The case 51 may include a bottom plate and a side plate connected to the bottom plate, and an accommodating cavity is enclosed with the bottom plate and the side plate. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrode assembly 52 is impregnated with an electrolyte solution. The number of electrode assemblies 52 comprised in the secondary battery 5 may be one or more, and may be selected by those skilled in the art based on actual requirements.
In the secondary battery described in the present application, the R value and silicon content X of the negative electrode plate, the Y value and nickel content n of the positive electrode plate, the correction coefficient $\alpha$, the dimensions (such as thickness) of the positive and negative electrode plates and their combined parameters (such as Ra, $R_{N/P}$, $R1_{N/P}$, $R2_{N/P}$, etc.), the battery cell dimensions (such as thickness), the composition of the negative electrode active material, the composition of the positive electrode active material, the composition of the electrolyte, and other parameters can be combined in any suitable manner, for example, referring to, but not limited to, the definitions above or the examples below.
In a second aspect, the present application provides an electrical apparatus, comprising the secondary battery in the first aspect of the present application.
The secondary battery may be used as a power source of the electrical apparatus, or may be used as an energy storage unit of the electrical apparatus. The electrical apparatus may include, but is not limited to, a mobile device, an electric vehicle, an electric train, a ship, a satellite, an energy storage system, etc. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, etc.
For the electrical apparatus, the secondary battery may be selected based on use requirements thereof.
FIG. 3 shows an electrical apparatus 6 as an example. The electrical apparatus is, e.g., an all-electric vehicle, a

hybrid electric vehicle, or a plug-in hybrid electric vehicle. To satisfy the need of the electrical apparatus for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

In a third aspect, the present application provides a method for manufacturing a secondary battery, which can be used to manufacture the secondary battery in the first aspect of the present application.

Based on any suitable embodiment in the present application, further, in some embodiments, the manufacturing method includes the following steps: providing a positive electrode plate, a negative electrode plate, a separator and an electrolyte, and assembling them to obtain the secondary battery in the first aspect of the present application;
wherein the positive electrode plate and the negative electrode plate are as defined in the first aspect of the present application.

Among them, parameters such as the volume ratio R of the negative electrode plate during the charging and discharging of the secondary battery and the volume ratio Y of the positive electrode plate during the charging and discharging of the secondary battery can be adjusted in any appropriate way within the context.

The secondary battery may be prepared through the shrinkage-expansion matching design of the positive electrode plate and the expandable negative electrode plate (such as silicon-containing negative electrode plate), and the obtained secondary battery can significantly reduce the volume expansion of the negative electrode plate, especially the reversible expansion of the negative electrode plate, can improve the stability of the negative electrode plate, facilitate the physical bonding, electron transport, and electrolyte solution impregnating functions among active materials in the negative electrode plate, and can also reduce the expansion of the battery cell (such as silicon-containing battery cell) of the expandable negative electrode plate, thereby suppressing the deterioration of battery cycling performance and battery cycle life caused by the expansion (such as silicon expansion) of the negative electrode material.

Some examples of the present application are described below. The embodiments described below are illustrative, are merely used to explain the present application, and should not be construed as limiting the present application. The embodiments in which techniques or conditions are not specified are implemented based on the description above, or based on techniques or conditions described in literatures of the art, or based on the product manuals. Where no manufacturers are specified, the employed reagents or instruments are all commercially available conventional products, or may be conventionally synthesized from commercially available products.

In the following examples, the room temperature refers to 20°C to 30°C, and further, may be 25°C.

In the following specific embodiments, there may be slight deviations within the weighing accuracy range regarding the measurement parameters of raw material components, unless otherwise specified. For temperature and time parameters, acceptable deviations due to instrument testing accuracy or operational precision are allowed.

Unless otherwise specified in the present application, the graphite material is commercially available artificial graphite ($D_v50$ is approximately 15 $\mu$m), and the elemental silicon is micron-sized silicon ($D_v50$ is approximately 3 $\mu$m).

In the present application, unless otherwise specified, $D_v50$ refers to the particle size corresponding to the cumulative volume distribution percentage of the material reaching 50%. This parameter indicates that the particle size of 50% of the material volume is less than or equal to $D_v50$, and the particle size of 50% of the material volume is greater than $D_v50$. Those skilled in the art can understand the meaning of $Dv_{50}$ and can use instruments and methods that are well known in the art for measurement. For example, testing can be conveniently performed by a laser particle size analyzer, such as Mastersizer 2000E laser particle size analyzer from Malvern Instruments Ltd. (UK) or the LS-909 laser particle size analyzer (Omec), with reference to a GB/T 19077-2016 particle size distribution laser diffraction method. For further testing, such as with equipment models like the MasterSizer 2000 laser particle size analyzer, the standard procedure GB/T19077-2016/ISO 13320:2009 can be used as a reference.

Example 1

(1) Preparation of positive electrode plate

A positive electrode active material NCM (nickel content n=90%, can be recorded as Ni90), a conductive agent acetylene black, and a binder polyvinylidene fluoride (PVDF) at a mass ratio of 97:2:1 were fully mixed and added to a solvent N-methyl pyrrolidone (NMP) to prepare a positive electrode slurry; which was uniformly applied on surfaces of both sides of a positive electrode collector aluminum foil, oven-dried at 85°C, then cold pressed, then die-cut, and stripped, to prepare a positive electrode plate of a lithium-ion battery. The compacted density of the positive electrode plate is 3.5 g/$m^3$.

(2) Preparation of negative electrode plate

The negative electrode active material, conductive agent, thickener sodium carboxymethyl cellulose (CMC), and binder were added to the solvent water at a mass ratio of 96:2:1:1 and mixed evenly to form a negative electrode slurry. The

negative electrode active material was composed of graphite materials and silicon-based materials (the types and contents of silicon-based materials can be found in Table 1). The composition of the conductive agent and the binder can be found in Table 1. In this example, the conductive agent was a mixture of conductive carbon black and single-walled carbon nanotubes at a mass ratio of 9:1, and the binder was PAA-type. The negative electrode slurry was evenly applied on surfaces of both sides of the negative electrode current collector copper foil, oven-dried at 85°C, and then cold-pressed to form a negative electrode plate of a lithium-ion battery. The compacted density of the negative electrode plate is 1.7 $g/m^3$.

(3) Preparation of separator

A polyethylene microporous thin film was used as a porous separator substrate, and inorganic aluminum oxide powder, polyvinylpyrrolidone, and acetone as a solvent were uniformly mixed at a weight ratio of 3:1.5:5.5 to prepare a slurry, and the slurry was applied to one surface of the substrate and oven-dried to obtain a separator.

(4) Preparation of electrolyte solution

The lithium salt was dissolved in the mixed solvent of ethylene carbonate, dimethyl carbonate and methyl ethyl carbonate (the volume ratio of ethylene carbonate, dimethyl carbonate and methyl ethyl carbonate was 1:2:1), and the fluoroethylene carbonate (FEC) additive was added to obtain an electrolyte solution for a lithium-ion battery. The lithium salt used is a mixture of lithium bis(fluorosulfonyl)imide (LIFSI) and lithium hexafluorophosphate ($LiPF_6$), and the ratio of the two can be found in Table 2. The amount of FEC added can also be found in Table 2.

(5) Preparation of lithium-ion battery

The positive electrode plate, negative electrode plate, and the separator above were winded with the separator disposed between the positive electrode plate and the negative electrode plate and with its side having the aluminum oxide coating close to the positive electrode plate and away from the negative electrode plate, to obtain a bare battery cell, followed by processes such as packaging, liquid injection, formation, and degassing, to provide a lithium-ion battery.

Examples 2-11 and Comparative Examples 1-6 can be performed using basically the same method as in Example 1. The different parameters can be found in Table 1.

The dimensional parameters of the positive and negative electrode plates in Examples 1-11 and Comparative Examples 1-6 can also be found in Tables 3-4.

In each example and comparative example, in order to obtain the R and Y values in Table 4, in addition to the parameters in Tables 1-2, the $D_v50$ values of the negative electrode active material and the positive electrode active material can also be appropriately adjusted. The $D_v50$ of the negative electrode active material can be adjusted in the range of 1 μm to 30 μm; here, the $D_v50$ of SiOx material can be adjusted in the range of 1 μm to 20 μm, the $D_v50$ of the silicon-carbon material can be adjusted in the range of 1 μm to 30 μm, the $D_v50$ of elemental silicon can be adjusted in the range of 1 μm to 10 μm, and the $D_v50$ of the positive electrode active material can be adjusted in the range of 1 μm to 20 μm.

Table 1.

| No. | Composition of positive electrode active material | Positive electrode nickel content n | Negative electrode active material | Negative electrode silicon content X | Negative electrode binder | Negative electrode conductive agent | Weight proportion of carbon nanotubes in negative electrode active material layer |
|---|---|---|---|---|---|---|---|
| Example 1 | Ni90 | 90% | SiOx | 25% | PAA type | Conductive carbon black + single-walled carbon nanotubes | 0.20% |

(continued)

| No. | Composition of positive electrode active material | Positive electrode nickel content n | Negative electrode active material | Negative electrode silicon content X | Negative electrode binder | Negative electrode conductive agent | Weight proportion of carbon nanotubes in negative electrode active material layer |
|---|---|---|---|---|---|---|---|
| Example 2 | Ni90 | 90% | SiOx | 25% | SBR type | Conductive carbon black + single-walled carbon nanotubes | 0.20% |
| Example 3 | Ni90 | 90% | SiOx | 25% | PAA type | Conductive carbon black + single-walled carbon nanotubes | 0.20% |
| Example 4 | Ni90 | 90% | Silicon-carbon material | 20% | PAA type | Conductive carbon black + single-walled carbon nanotubes | 0.15% |
| Example 5 | Ni90 | 90% | SiOx | 5% | SBR type | Conductive carbon black + single-walled carbon nanotubes | 0.02% |
| Example 6 | Ni80 | 80% | SiOx | 25% | PAA type | Conductive carbon black + single-walled carbon nanotubes | 0.20% |
| Example 7 | Ni90 | 90% | SiOx | 40% | PAA type | Conductive carbon black + multi-walled carbon nanotubes | 1.00% |
| Example 8 | Ni80 | 80% | SiOx | 40% | PAA type | Conductive carbon black + single-walled carbon nanotubes | 0.50% |

(continued)

| No. | Composition of positive electrode active material | Positive electrode nickel content n | Negative electrode active material | Negative electrode silicon content X | Negative electrode binder | Negative electrode conductive agent | Weight proportion of carbon nanotubes in negative electrode active material layer |
|---|---|---|---|---|---|---|---|
| Example 9 | Ni80 | 80% | SiOx | 25% | PAA type | Conductive carbon black + single-walled carbon nanotubes | 0.20% |
| Example 10 | Ni90 | 90% | SiOx | 25% | PAA type | Conductive carbon black | 0% |
| Example 11 | Ni90 | 90% | SiOx | 25% | PAA type | Conductive carbon black + single-walled carbon nanotubes | 0.20% |
| Comparative example 1 | Ni90 | 90% | SiOx | 25% | PAA type | Conductive carbon black | 0% |
| Comparative example 2 | Ni90 | 90% | Elemental silicon | 25% | PAA type | Conductive carbon black + single-walled carbon nanotubes | 0.01% |
| Comparative example 3 | LiCoO2 | 50% | SiOx | 25% | PAA type | Conductive carbon black + single-walled carbon nanotubes | 0.20% |
| Comparative example 4 | Ni50 | 50% | SiOx | 25% | PAA type | Conductive carbon black + single-walled carbon nanotubes | 0.20% |
| Comparative example 5 | Ni90 | 90% | Elemental silicon | 25% | PAA type | Conductive carbon black + single-walled carbon nanotubes | 1% |

(continued)

| No. | Composition of positive electrode active material | Positive electrode nickel content n | Negative electrode active material | Negative electrode silicon content X | Negative electrode binder | Negative electrode conductive agent | Weight proportion of carbon nanotubes in negative electrode active material layer |
|---|---|---|---|---|---|---|---|
| Comparative example 6 | Ni90 | 90% | SiOx | 40% | PAA type | Conductive carbon black + multi-walled carbon nanotubes | 0.20% |

In Table 1, under "Composition of Positive Electrode Active Material", Ni90, Ni80, and Ni50 are all NCM ternary positive electrode materials. Ni90 indicates a nickel content n of 90%, Ni80 indicates a nickel content n of 80%, and Ni50 indicates a nickel content n of 50%. The positive electrode active material corresponding to Ni90 is $LiNi_{0.9}Co_{0.08}Mn_{0.02}O_2$, the positive electrode active material corresponding to Ni80 is $LiNi_{0.8}Co_{0.1}Mn_{0.1}O_2$, and the positive electrode active material corresponding to Ni50 is $LiNi_{0.5}Co_{0.2}Mn_{0.3}O_2$.The definition of nickel content n is consistent with the above, representing the atomic percentage of Ni in Ni, Co, and Mn, calculated by the number of atoms..

In Table 1, "Negative Electrode Active Material" only shows the types of silicon-based materials in the negative electrode active material. The composition of the corresponding negative electrode active material can be found in the previous description. For example, in Example 1, the negative electrode active material is composed of a graphite material and a silicon-based material.

In Table 1, "silicon content X" represents the weight percentage of silicon-based materials in the negative electrode active material.

In Table 1, the mass percentage of "negative electrode conductive agent" in the negative electrode active material, conductive agent, thickener, and binder of the negative electrode active material layer is 2%.

Table 2.

| No. | Weight ratio of electrolyte solution lithium salt LIFSI:$LiPF_6$ | Weight proportion of LIFSI in electrolyte solution lithium salt $W_{FEC}$ | Mass content of electrolyte solution additive FEC in electrolyte solution $W_{FEC}$ | $W_{FEC}/X$ |
|---|---|---|---|---|
| Example 1 | 7:3 | 70% | 20% | 0.8 |
| Example 2 | 7:3 | 70% | 10% | 0.4 |
| Example 3 | 3:7 | 30% | 20% | 0.8 |
| Example 4 | 7:3 | 70% | 20% | 1 |
| Example 5 | 7:3 | 70% | 5% | 1 |
| Example 6 | 7:3 | 70% | 20% | 0.8 |
| Example 7 | 8:2 | 80% | 25% | 0.625 |
| Example 8 | 8:2 | 80% | 25% | 0.625 |
| Example 9 | 7:3 | 70% | 20% | 0.8 |
| Example 10 | 7:3 | 70% | 20% | 0.8 |
| Example 11 | 1:9 | 10% | 20% | 0.8 |
| Comparative example 1 | 7:3 | 70% | 20% | 0.8 |
| Comparative example 2 | 1:9 | 10% | 20% | 0.8 |

(continued)

| No. | Weight ratio of electrolyte solution lithium salt LIFSI:$LiPF_6$ | Weight proportion of LIFSI in electrolyte solution lithium salt $W_{FEC}$ | Mass content of electrolyte solution additive FEC in electrolyte solution $W_{FEC}$ | $W_{FEC}/X$ |
|---|---|---|---|---|
| Comparative example 3 | 7:3 | 70% | 5% | 0.2 |
| Comparative example 4 | 7:3 | 70% | 20% | 0.8 |
| Comparative example 5 | 7:3 | 70% | 20% | 0.8 |
| Comparative example 6 | 8:2 | 80% | 25% | 0.625 |

Table 3.

| No. | Thickness of negative electrode plate during discharge /μm | Thickness of positive electrode plate during discharge /um | Total thickness of positive and negative electrode plates during discharge /μm | Thickness of negative electrode plate during charge /um | Thickness of positive electrode plate during charge /um | Total thickness of positive and negative electrode plates during charge /μm |
|---|---|---|---|---|---|---|
| Example 1 | 114 | 126 | 240 | 154 | 121 | 275 |
| Example 2 | 115 | 126 | 241 | 156 | 121 | 277 |
| Example 3 | 114 | 126 | 240 | 154 | 121 | 275 |
| Example 4 | 114 | 131 | 245 | 135 | 125 | 260 |
| Example 5 | 166 | 126 | 292 | 184 | 121 | 305 |
| Example 6 | 109 | 130 | 239 | 148 | 127 | 275 |
| Example 7 | 82 | 113 | 195 | 122 | 108 | 230 |
| Example 8 | 84 | 116 | 200 | 120 | 111 | 231 |
| Example 9 | 109 | 129 | 238 | 148 | 126 | 274 |
| Example 10 | 114 | 126 | 240 | 154 | 121 | 275 |
| Example 11 | 114 | 126 | 240 | 154 | 121 | 275 |
| Comparative example 1 | 114 | 126 | 240 | 174 | 121 | 295 |
| Comparative example 2 | 113 | 156 | 269 | 197 | 149 | 346 |
| Comparative example 3 | 112 | 138 | 250 | 152 | 150 | 302 |
| Comparative example 4 | 81 | 128 | 209 | 110 | 136 | 246 |
| Comparative example 5 | 113 | 156 | 269 | 197 | 149 | 346 |
| Comparative example 6 | 84 | 113 | 197 | 135 | 108 | 243 |

Table 4.

| No. | Ratio R of volumes of negative electrode plate during charging and discharging | Ratio Y of positive electrode plate during charging and discharging | Thickness ratio of negative electrode plate to positive electrode plate during charging $R1_{N/P}$ | Thickness ratio of negative electrode plate to positive electrode plate during discharging $R2_{N/P}$ | Ratio of total thicknesses of positive and negative electrode plates during charging and discharging Ra | Negative electrode correction coefficient $\alpha$=R/(1.05X+1.4· - (1-X)) | Does it satisfy Y≤1.14-0.2n |
|---|---|---|---|---|---|---|---|
| Example 1 | 1.35 | 0.96 | 1.27 | 0.90 | 1.15 | 1.029 | Satisfy |
| Example 2 | 1.36 | 0.96 | 1.29 | 0.91 | 1.15 | 1.034 | Satisfy |
| Example 3 | 1.35 | 0.96 | 1.27 | 0.90 | 1.15 | 1.029 | Satisfy |
| Example 4 | 1.18 | 0.95 | 1.08 | 0.87 | 1.06 | 0.890 | Satisfy |
| Example 5 | 1.11 | 0.96 | 1.52 | 1.32 | 1.04 | 0.802 | Satisfy |
| Example 6 | 1.36 | 0.98 | 1.17 | 0.84 | 1.15 | 1.035 | Satisfy |
| Example 7 | 1.49 | 0.96 | 1.13 | 0.73 | 1.18 | 1.181 | Satisfy |
| Example 8 | 1.43 | 0.96 | 1.08 | 0.72 | 1.16 | 1.134 | Satisfy |
| Example 9 | 1.36 | 0.98 | 1.17 | 0.84 | 1.15 | 1.035 | Satisfy |
| Example 10 | 1.35 | 0.96 | 1.27 | 0.90 | 1.15 | 1.029 | Satisfy |
| Example 11 | 1.35 | 0.96 | 1.27 | 0.90 | 1.15 | 1.029 | Satisfy |
| Comparative example 1 | 1.53 | 0.96 | 1.44 | 0.90 | 1.23 | 1.163 | Satisfy |
| Comparative example 2 | 1.74 | 0.96 | 1.32 | 0.72 | 1.29 | 1.328 | Satisfy |
| Comparative example 3 | 1.36 | 1.09 | 1.01 | 0.81 | 1.21 | 1.036 | Not satisfy |
| Comparative example 4 | 1.36 | 1.06 | 0.81 | 0.63 | 1.18 | 1.036 | Not satisfy |
| Comparative example 5 | 1.74 | 0.96 | 1.32 | 0.72 | 1.29 | 1.326 | Satisfy |
| Comparative example 6 | 1.96 | 0.96 | 1.25 | 0.74 | 1.23 | 1.276 | Satisfy |

Test and analysis methods:

1. Dimensional testing methods for positive and negative electrode plates under charging and discharging conditions

Two essentially identical to-be-tested batteries prepared by the same method were subjected to a charge-discharge cycle under the same conditions at a temperature of 25°C.

One of the to-be-tested batteries was left to stand at a constant temperature of 25°C for 2h, then charged at 2.8V to 4.2V according to 0.5 C to 4.2 V, and then charged at a constant voltage of 4.2V to a current ≤ 0.05C. The battery was left to stand for 10 min, and the battery cell was disassembled to remove the positive and negative electrode plates.

The other to-be-tested battery was left to stand at a constant temperature of 25°C for 2h, then charged at 2.8V to 4.2V according to 0.5 C to 4.2 V, and then charged at a constant voltage of 4.2V to a current ≤ 0.05C. The battery was left to stand for 10 min, then discharged according to 0.5 C to 2.8 V, and the battery cell was disassembled to remove the positive and negative electrode plates.

Two sets of positive and negative electrode plates taken out after completion of charging and discharging were respectively tested for the thickness of the electrode plates with a micrometer or a scanning electron microscope (SEM) diagram of brittle fracture cross-section.

2. Testing method for volumetric energy density (VED)

The to-be-tested battery was allowed to stand in a constant temperature environment of 25°C for 2h, then charged at 2.8V to 4.2 V according to 0.33C to 4.2 V, then charged at a constant voltage of 4.2 V to a current ≤0.05 C, left for 10 min, then discharged according to 0.33 C to 2.8 V, and a capacity C0 of this lithium-ion secondary battery was recorded. VED was a ratio of C0 to the volume of the battery case.

The test results can be found in Table 5.

3. Test method for cycling performance of battery at 25°C and battery cell surface pressure

At 25°C, the battery to be tested is placed in a steel plate fixture that can monitor expansion force, with a 1mm buffer pad placed between the battery and the fixture. The battery was continuously charged and discharged in the 10% to 95% SoC interval according to 0.5 C, and the battery was left to stand for 30 min at the end of each charge and discharge. Until the capacity retention rate of the battery was 80%, the number of cycles when it decayed to 80% (denoted as "Life when cycling at 25°C until 80% SoH") and the maximum expansion force in the last cycle were recorded. The ratio of expansion force to the large-surface area of the battery cell was recorded as the battery cell surface pressure when cycling at 25°C until 80% SoH.

"Battery cell large surface" refers to the surface of the battery cell that is subjected to force during testing, which is usually a plane determined by the height and width of the battery cell.

For test results, please refer to Table 5 for "Life when cycling at 25°C until 80% SoH" and "Battery cell surface pressure when cycling at 25°C until 80% SoH".

4. Observation of negative electrode plate-electrolyte solution interface

When there were no purple spots and no lithium plating at the negative electrode plate-electrolyte solution interface, it was recorded as "good interface".

The "bad interface" of the negative electrode plate-electrolyte solution interface included purple spots and lithium plating.

The expansion of the negative electrode plate can easily lead to the destruction of the conductive network inside the electrode plate, affecting the stability of the electrode plate. As a result, active ions cannot be intercalated in time, affecting the battery kinetic performance. Purple spots are mainly caused by excessive expansion of the negative electrode plate, resulting in poor contact between the electrode plate and the electrolyte solution and insufficient lithium intercalation. Lithium plating is mainly caused by excessive expansion of the negative electrode plate, which leads to the deterioration of the kinetics of the negative electrode due to stress. Lithium ions migrating from the positive electrode cannot be intercalated in time and are deposited on the surface of the negative electrode plate. Alternatively, excessive expansion of the negative electrode plate may cause the electrode structure to collapse, leading to an insufficient amount of active material in the negative electrode to function properly, leaving the negative electrode without enough sites to accommodate the lithium ions from the positive electrode. The test results can be found in Table 5 "Interface conditions".

Test result and analysis

The lithium-ion secondary batteries prepared in Examples 1-11, while maintaining a certain volumetric energy density, exhibited reduced battery cell surface pressure and increased number of cycles. This indicated that the negative electrode plate and the negative electrode-electrolyte solution interface have good stability, battery cell layer expansion is suppressed, and the cycle life is increased. The lithium-ion secondary batteries prepared in Examples 1-11 all had appropriate R and Y values, which can reduce the volume expansion of the negative electrode plate and the volume expansion of the battery cell, improve the stability of the negative electrode plate, and suppress the damage of silicon expansion to the cycle life of the battery (see Table 5). In addition, they also had a high volumetric energy density (VED).

In Examples 1-9 and 11, carbon nanotubes in the negative electrode active material layer served as a conductive agent. In addition to having high volumetric energy density, reduced battery cell surface pressure, and increased number of cycles, the negative electrode-electrolyte interface also showed no purple spots or large-area crystallization, indicating excellent interfacial stability.

Both Example 10 and Comparative Example 1 used conductive carbon black as the conductive agent in the negative electrode active material layer. Compared with the example that used carbon nanotubes, the negative electrode interface of Example 10 and Comparative Example 1 was relatively poor. This is because the conductive network formed after cycling was relatively poor. In Example 10 and Comparative Example 1, the R value was adjusted by regulating the thickness of the negative electrode plate during charging. In Example 10, $R \leq 1.5$, while in Comparative Example 1, R was 1.53, meaning the volume ratio during charging/discharging was greater than 50%. The results showed that Example 10 had a higher volumetric energy density and an increased number of cycles than Comparative Example 1, and also a lower battery cell surface pressure. It is evident that, without using carbon nanotubes as a conductive agent, the embodiments of the present application still have advantages in limiting volume expansion and improving cycling performance.

Example 11 and Comparative Example 2 have the same silicon content. The R value was adjusted by regulating the type of the silicon-based material. The R value in Example 11 was $\leq$1.5, while the R value in Comparative Example 2 was 1.74, which is much higher than 1.5. According to the test results, Example 11 had a significantly lower battery cell surface pressure, a significantly increased number of cycle cycles, and a significantly improved negative electrode-electrolyte solution interface compared to Comparative Example 2. Example 11 had no purple spots or large-area crystallization phenomenon. In Example 11, while maintaining the volumetric energy density basically unchanged, the volume expansion of the negative electrode plate and the battery cell volume expansion were reduced, the stability of the negative electrode plate was improved, and the damage of silicon expansion to the cycle life of the battery was suppressed.

Comparing Example 1 and Comparative Example 4, the Y value was adjusted in Comparative Example 4 by adjusting the composition of the positive electrode active material, including adjusting the Ni content, and also adjusting dimensions of the electrode plates during battery charging and discharging. The Y value in Comparative Example 4 was 1.09, which is greater than 0.98. According to the test results, Example 1 has not only improved volumetric energy density, but also significantly reduced battery cell surface pressure and significantly increased number of cycles. It can be seen that Example 1 significantly reduced the volume expansion of the negative electrode plate and the battery cell volume expansion, improved the stability of the negative electrode plate, and suppressed the damage of silicon expansion to the cycle life of the battery.

Comparative Example 3 adjusted the content of the additive FEC based on Comparative Example 4, and also adjusted the dimensions of the electrode plates during battery charging and discharging, thereby adjusting the Y value. In Comparative Example 4, the Y value was 1.06, which is greater than 0.98. According to the test results, although the volumetric energy density of Comparative Example 3 was improved, it led to a significant increase in battery cell surface pressure and a significant reduction in the number of cycles. It can be seen that, compared with Comparative Example 4 and Example 1, the cost of achieving the improved volumetric energy density in Comparative Example 3 is higher electrode plate expansion and battery cell expansion, as well as severely deteriorated cycling performance.

Based on Comparative Example 2, Comparative Example 5 adjusted the weight percentage ($W_{FSI}$) of lithium bis(fluorosulfonyl)imide in the electrolyte lithium salt relative to the sum of the weights of lithium bis(fluorosulfonyl)imide and lithium hexafluorophosphate. In Comparative Example 2, it was 10%, while in Comparative Example 5, it was 70%. Although the battery cell surface pressure was reduced and the battery cycle life was increased, the R value in Comparative Example 5 was still greater than 1.5 (the R value in Comparative Example 5 was 1.74). Compared with Example 11, Comparative Example 5 still had a significantly increased battery cell surface pressure and a significantly reduced number of battery cycles. Furthermore, large-area crystallization accompanied by purple spots appeared at the negative electrode-electrolyte solution interface. It can be seen that the problems of electrode plate expansion and battery cell expansion in Comparative Example 5 were still relatively serious, the negative electrode-electrolyte solution interface was also unstable, and the battery cycling performance was significantly deteriorated.

It can be seen from Comparing Example 7 and Comparative Example 6 that both employed an extremely high silicon content X value (40%), resulting in a significant increase in volumetric energy density. In Example 7, the R value was

≤1.5, while in Comparative Example 6, R was much higher than 1.5. Compared to Comparative Example 6 which had the same silicon content, Example 7 significantly improved the volumetric energy density while exhibiting a relatively low battery cell surface pressure, a relatively high number of battery cycles, and a significantly better and more stable negative electrode-electrolyte solution interface, without purple spots or large-area crystallization. This demonstrated that even with a high silicon content, by coordinating the volume changes of the positive and negative electrodes under charge and discharge conditions, it is possible to reduce electrode plate expansion and battery cell expansion to a certain extent, improve the stability of the electrode plate and electrode plate-electrolyte solution interface, and enhance the battery cycling performance.

Example 8 was similar to Example 7, the main difference being the type of the conductive agent. Example 8 can also reduce the expansion of the electrode plate and the battery cell to a certain extent by coordinating the volume changes of the positive and negative electrodes under charge and discharge conditions, thereby improving the stability of the electrode plate and the electrode plate-electrolyte solution interface and improving the battery cycling performance.

Table 5.

| No. | VED (Wh/L) | Battery cell surface pressure when cycling at 25°C until 80% SoH/MPa | Life when cycling at 25°C until 80% SoH/cycle | Interface conditions |
|---|---|---|---|---|
| Example 1 | 782 | 1.01 | 1048 | Good interface |
| Example 2 | 780 | 1.10 | 981 | Good interface |
| Example 3 | 775 | 1.03 | 992 | Good interface |
| Example 4 | 811 | 0.90 | 1123 | Good interface |
| Example 5 | 710 | 0.76 | 1602 | Good interface |
| Example 6 | 762 | 1.15 | 1247 | Good interface |
| Example 7 | 897 | 1.19 | 569 | Good interface |
| Example 8 | 870 | 1.20 | 591 | Good interface |
| Example 9 | 758 | 1.13 | 1298 | Good interface |
| Example 10 | 781 | 1.3 | 282 | Purple spots |
| Example 11 | 778 | 1.2 | 819 | Good interface |
| Comparative example 1 | 738 | 1.5 | 196 | Large-area purple spots |
| Comparative example 2 | 779 | 1.8 | 178 | Large-area lithium plating, accompanied by purple spots |
| Comparative example 3 | 847 | 1.8 | 549 | Large-area lithium plating |
| Comparative example 4 | 602 | 1.65 | 798 | Large-area lithium plating |
| Comparative example 5 | 778 | 1.70 | 272 | Large-area lithium plating, accompanied by purple spots |
| Comparative example 6 | 868 | 1.54 | 331 | Good interface |

The technical features of the embodiments described above can be combined arbitrarily. In order to make the description concise, not all possible combinations of the technical features in the aforementioned embodiments are described. However, all the combinations of the technical features should be considered as falling within the scope described in this specification provided that they do not conflict with each other.

It should be noted that the present application is not limited to the above embodiments. The above embodiments are examples only, and any embodiment that has substantially the same constitutions and has the same effects as the technical ideas within the scope of the technical solutions of the present application is encompassed within the technical

scope of the present application. The above embodiments merely represent some embodiments of the present application, giving details thereof, but should not be construed as limiting the scope of the patent thereby. In addition, without departing from the scope of the subject matter of the present application, various modifications that can be conceived of by those skilled in the art and are applied to the embodiments, and other embodiments constructed by combining some of the constituent elements of the embodiments are also encompassed within the scope of the present application. It should be noted that those of ordinary skill in the art may further make variations and improvements without departing from the concept of the present application, all of which fall within the scope of protection of the present application. Therefore, the scope of protection of the present application should be determined by the appended claims, and the specification and drawings can be used to explain the contents of the claims.

## Claims

1. A secondary battery, wherein the secondary battery comprises a positive electrode plate and a negative electrode plate, the negative electrode plate comprises a negative electrode active material layer, and the negative electrode active material layer comprises a negative electrode active material;
in the same charging and discharging cycle process, the volume ratio of the negative electrode plate during charging and discharging of the secondary battery is denoted as R, where $R \leq 1.5$, and the volume ratio of the positive electrode plate during charging and discharging of the secondary battery is denoted as Y, where $Y \leq 0.98$.

2. The secondary battery according to claim 1, wherein the secondary battery satisfies one or more of the following features:

R is 1.1 to 1.5, optionally R is 1.1 to 1.4, and further optionally R is 1.15 to 1.4;
Y is 0.9 to 0.98, and optionally, Y is 0.95 to 0.98.

3. The secondary battery according to claim 1 or 2, wherein the negative electrode active material comprises a silicon-based material.

4. The secondary battery according to claim 3, wherein the weight proportion of the silicon-based material in the negative electrode active material is denoted as X, and the secondary battery satisfies one or more of the following features:

R is 1.1 to 1.5;
Y is 0.9 to 0.98;

$$X \geq 3\%;$$

and

$$0.8 \leq R/(1.05 \cdot X+(1-X) \cdot 1.4) \leq 1.2.$$

5. The secondary battery according to claim 4, wherein the secondary battery satisfies one or more of the following features:

R is 1.1 to 1.4;
Y is 0.95 to 0.98;
X is 3% to 40%, optionally 3% to 28%, further optionally 5% to 25%, and even further optionally 5% to 20%; and

$$0.8 \leq R/(1.05 \cdot X+(1-X) \cdot 1.4) \leq 1.1.$$

6. The secondary battery according to any one of claims 3 to 4, wherein the secondary battery satisfies one or more of the following features:

R is 1.15 to 1.4;
X is 15% to 25%; and

$$0.85 \leq R/(1.05 \cdot X + (1-X) \cdot 1.4) \leq 1.05.$$

**7.** The secondary battery according to any one of claims 1 to 5, wherein during the same charge-discharge cycle, the ratio Ra of the total volume of the negative electrode plate and the positive electrode plate during charging to the total volume during discharging is 1.03 to 1.20, and optionally, Ra is 1.06 to 1.15.

**8.** The secondary battery according to any one of claims 1 to 7, wherein during the same charge-discharge cycle, the volume ratio $R_{N/P}$ of the negative electrode plate to the positive electrode plate during charging or discharging of the secondary battery is 0.7 to 1.6.

**9.** The secondary battery according to claim 8, wherein during the same charge-discharge cycle, the secondary battery satisfies one or more of the following features:

the volume ratio $R1_{N/P}$ of the negative electrode plate to the positive electrode plate during charging of the secondary battery is 1.0 to 1.6;
the volume ratio $R2_{N/P}$ of the negative electrode plate to the positive electrode plate during discharging of the secondary battery is 0.7 to 1.4;
the thickness of the negative electrode plate during charging of the secondary battery is 120μm to 190μm;
the thickness of the negative electrode plate during discharging of the secondary battery is 80μm to 180μm;
the thickness of the positive electrode plate during charging of the secondary battery is 100μm to 130μm;
the thickness of the positive electrode plate during discharging of the secondary battery is 110μm to 135μm;
the total thickness of the negative electrode plate and the positive electrode plate during charging of the secondary battery is 230μm to 310μm;
the total thickness of the negative electrode plate and the positive electrode plate during discharging of the secondary battery is 190μm to 300μm.

**10.** The secondary battery according to claim 8 or 9, wherein during the same charge-discharge cycle, the secondary battery satisfies one or more of the following features:

$R1_{N/P}$ is 1.0 to 1.55, and optionally, $R1_{N/P}$ is 1.0 to 1.35;
$R2_{N/P}$ is 0.8 to 1.35, and optionally, $R2_{N/P}$ is 0.8 to 1.0;
the thickness of the negative electrode plate during charging of the secondary battery is 130μm to 190μm;
the thickness of the negative electrode plate during discharging of the secondary battery is 100μm to 180μm;
the thickness of the positive electrode plate during charging of the secondary battery is 120μm to 130μm;
the thickness of the positive electrode plate during discharging of the secondary battery is 120μm to 135μm;
the total thickness of the negative electrode plate and the positive electrode plate during charging of the secondary battery is 250μm to 310μm;
the total thickness of the negative electrode plate and the positive electrode plate during discharging of the secondary battery is 230μm to 300μm.

**11.** The secondary battery according to any one of claims 1 to 10, wherein during the same charge-discharge cycle, the charge-discharge cycle temperature is 25-30 °C, and the charge-discharge rate is 0.33-0.5C.

**12.** The secondary battery according to any one of claims 1 to 11, wherein the negative electrode active material comprises a silicon-based material; the silicon-based material comprises one or more of elemental silicon, a silicon oxide material, a silicon carbon material, a silicon nitrogen composite, and a silicon alloy;

optionally, the silicon-based material comprises one or more of elemental silicon, a silicon oxide materials, and a silicon-carbon material;
further optionally, the silicon-based material comprises one or more of a silicon oxide material and a silicon-carbon material.

**13.** The secondary battery according to any one of claims 1 to 12, wherein the negative electrode active material comprises a silicon-based material, and the negative electrode active material further comprises one or more of the following materials: a carbon-based material, a tin-based material, and lithium titanate; the carbon-based material comprises one or more of a graphite material, soft carbon, and hard carbon, and the graphite material comprises one or more of artificial graphite and natural graphite;

optionally, the negative electrode active material comprises a silicon-based material and a carbon-based material; further optionally, in the negative electrode active material, the total mass of the silicon-based material and the carbon-based material accounts for 80% to 100% of the mass of the negative electrode active material, optionally 90% to 100%, and further optionally 100%;
optionally, the negative electrode active material comprises a silicon-based material and a graphite material; further optionally, in the negative electrode active material, the total mass of the silicon-based material and the graphite material accounts for 80% to 100% of the mass of the negative electrode active material, optionally 90% to 100%, and further optionally 100%.

**14.** The secondary battery according to any one of claims 1 to 13, wherein the negative electrode active material layer comprises carbon nanotubes;
optionally, the carbon nanotubes comprise one or more of single-walled carbon nanotubes and multi-walled carbon nanotubes.

**15.** The secondary battery according to claim 14, wherein the negative electrode active material layer satisfies one or both of the following features:

the carbon nanotubes comprise single-walled carbon nanotubes;
the weight percentage of the carbon nanotubes in the negative electrode active material layer is 0.02% to 1.0%.

**16.** The secondary battery according to claim 14 or 15, wherein the weight percentage of the carbon nanotubes in the negative electrode active material layer is 0.05% to 0.5%.

**17.** The secondary battery according to any one of claims 1 to 16, wherein the secondary battery is a lithium-ion secondary battery.

**18.** The secondary battery according to any one of claims 1 to 17, wherein the positive electrode plate comprises a positive electrode active material layer, the positive electrode active material layer comprises a positive electrode active material, and the positive electrode active material comprises a nickel-containing lithium oxide; in the nickel-containing lithium oxide, the total atomic stoichiometric number of non-lithium and non-oxygen elements is taken as 1, the atomic stoichiometric number of nickel element is denoted as n, and $n \geq 0.7$;

optionally, $n \geq 0.71$;
further optionally, $n \geq 0.8$;
more further optionally, $0.8 \leq n<1$;
even further optionally, $0.9 \leq n<1$.

**19.** The secondary battery according to any one of claims 1 to 18, wherein the positive electrode plate comprises a positive electrode active material layer, the positive electrode active material layer comprises a positive electrode active material, and the positive electrode active material comprises a nickel-containing lithium oxide; in the nickel-containing lithium oxide, the total atomic stoichiometric number of non-lithium and non-oxygen elements is taken as 1, the atomic stoichiometric number of nickel element is denoted as n, the positive electrode plate satisfies $Y \leq 1.14-0.2n$, and $n \geq 0.8$;

optionally $0.8 \leq n<1$;
further optionally, $0.9 \leq n<1$.

**20.** The secondary battery according to any one of claims 1 to 19, wherein the positive electrode plate comprises a positive electrode active material layer, the positive electrode active material layer comprises a positive electrode active material, and the positive electrode active material comprises one or more of a ternary material and a modified ternary material, wherein the modified ternary material is a ternary material containing a modifying element, and the modifying element exists as a doping element, as a coating element, or as a combination of doping element and coating element.

**21.** The secondary battery according to claim 20, wherein the secondary battery satisfies one or more of the following features:

The positive electrode active material comprises one or more of a NCM ternary material, a NCA ternary material, a modified NCM ternary material, and a modified NCA material; wherein the modified NCM ternary material is an

NCM ternary material containing the modifying element, and the modified NCA ternary material is an NCA ternary material containing the modifying element;
the modifying element in the modified ternary material comprises one or more of Na, K, Ca, Ba, Sb, Ti, Zr, W, Sr, Nb, Mo, Si, Mg, B, Cr and Ta;
the chemical formula of the positive electrode active material is $Li_x(Ni_aCo_bM_cM'_d)O_{2-e}$, where $0.6 \le x \le 1.2$, $0<a<1$, $0<b<1$, $0<c<1$, $0<d<1$, $a+b+c+d=1$, $-0.1 \le e \le 0.1$, M comprises at least one of Mn and Al, and M' comprises one or more of Na, K, Ca, Ba, Sb, Ti, Zr, W, Sr, Nb, Mo, Si, Mg, B, Cr and Ta;
the positive electrode active material comprises a nickel-containing lithium oxide; in the nickel-containing lithium oxide, the total atomic stoichiometric number of non-lithium and non-oxygen elements is taken as 1, the atomic stoichiometric number of nickel element is denoted as n, and the positive electrode plate satisfies $Y \le 1.14-0.2n$.

**22.** The secondary battery according to claim 21, wherein the secondary battery satisfies one or more of the following features:

$$a \ge 0.8;$$

$n \ge 0.8$, optionally $0.8 \le n < 1$.

**23.** The secondary battery according to claim 21 or 22, wherein the secondary battery satisfies one or more of the following features:

$$0.9 \le a < 1;$$

$$0.9 \le n < 1.$$

**24.** The secondary battery according to any one of claims 1 to 23, wherein the negative electrode active material layer comprises a negative electrode active material, a binder, and a conductive agent; the positive electrode plate comprises a positive electrode active material layer, and the positive electrode active material layer comprises a positive electrode active material, a binder, and a conductive agent.

**25.** The secondary battery according to any one of claims 1 to 23, wherein the secondary battery comprises an electrolyte solution; the electrolyte solution comprises a lithium salt and a solvent;

the lithium salt comprises lithium bis(fluorosulfonyl)imide and lithium hexafluorophosphate;
in the electrolyte solution, the percentage of the weight of lithium bis(fluorosulfonyl)imide relative to the sum of the weights of lithium bis(fluorosulfonyl)imide and lithium hexafluorophosphate is denoted as $W_{FSI}$, and $W_{FSI}$ is 10% to 80%.

**26.** The secondary battery according to claim 25, wherein $W_{FSI}$ is 30% to 70%.

**27.** The secondary battery according to any one of claims 1 to 26, wherein the secondary battery comprises an electrolyte solution; the electrolyte solution comprises an additive, and the additive comprises fluoroethylene carbonate; wherein the weight percentage of fluoroethylene carbonate in the electrolyte solution is denoted as $W_{FEC}$;
the secondary battery satisfies $W_{FEC}/X \ge 0.3$, wherein X represents the weight percentage of the silicon-based material in the negative electrode active material.

**28.** An electrical apparatus, comprising the secondary battery according to any one of claims 1 to 27.

**29.** A method for preparing a secondary battery, comprising the following steps: providing a positive electrode plate, a negative electrode plate, a separator, and an electrolyte, and assembling them to obtain the secondary battery according to any one of claims 1 to 28;
wherein the positive electrode plate and the negative electrode plate are as defined in any one of claims 1 to 28.

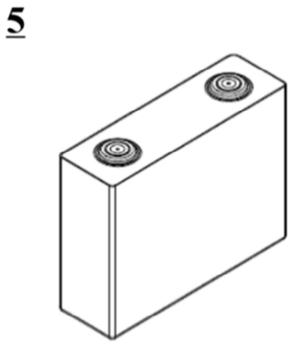


FIG. 1

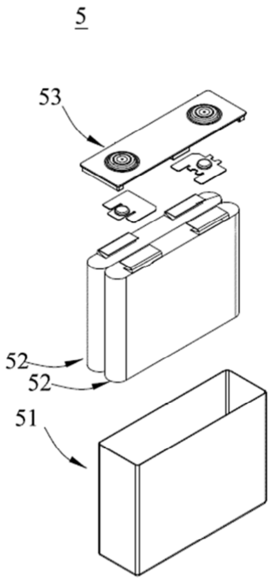


FIG. 2

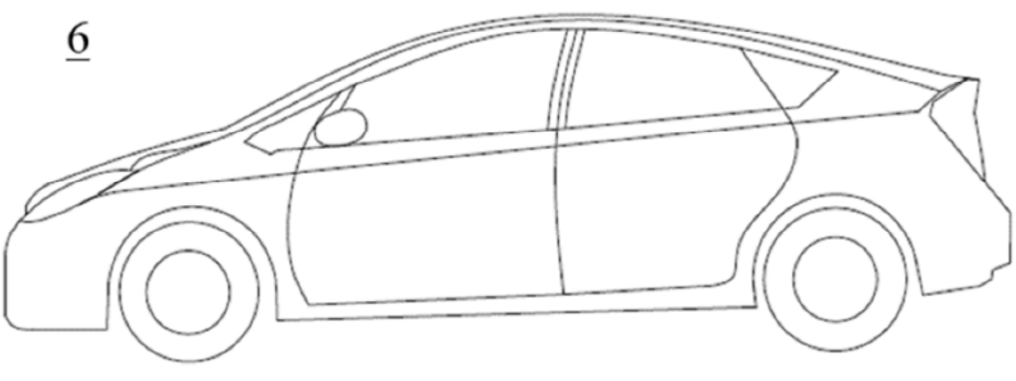


FIG. 3

## INTERNATIONAL SEARCH REPORT

International application No.
**PCT/CN2023/119077**

**A. CLASSIFICATION OF SUBJECT MATTER**

H01M4/134(2010.01)i; H01M4/131(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI; WEB OF SCIENCE: 正极, 负极, 充电, 放电, 体积, 膨胀, positive electrode, negative electrode, charge, discharge, volume, expansion

**C. DOCUMENTS CONSIDERED TO BE RELEVANT**

| Category* | Citation of document, with indication, where appropriate, of the relevant passages | Relevant to claim No. |
|---|---|---|
| PX | CN 116364860 A (NINGDE CONTEMPORARY AMPEREX TECHNOLOGY CO., LTD.) 30 June 2023 (2023-06-30)<br>description, paragraphs 69-200 | 1-29 |
| X | CN 113474916 A (WASEDA UNIVERSITY et al.) 01 October 2021 (2021-10-01)<br>description, paragraphs 14-71, and figures 1-6 | 1-29 |
| X | CN 110199427 A (WASEDA UNIVERSITY et al.) 03 September 2019 (2019-09-03)<br>description, paragraphs 25-102 | 1-29 |
| X | CN 104681853 A (GUANGDONG ZHUGUANG NEW ENERGY TECHNOLOGY CO., LTD.) 03 June 2015 (2015-06-03)<br>description, paragraphs 5-46 | 1-29 |
| A | CN 112786949 A (NINGDE CONTEMPORARY AMPEREX TECHNOLOGY CO., LTD.) 11 May 2021 (2021-05-11)<br>entire document | 1-29 |
| A | JP 2005135925 A (HITACHI MAXELL LTD.) 26 May 2005 (2005-05-26)<br>entire document | 1-29 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 February 2024** | **16 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/119077**

| Patent document cited in search report | Publication date (day/month/year) | Patent family member(s) | Publication date (day/month/year) |
|---|---|---|---|
| CN 116364860 A | 30 June 2023 | CN 116364860 B | 10 November 2023 |
| CN 113474916 A | 01 October 2021 | US 2022140351 A1 | 05 May 2022 |
| | | WO 2020175488 A1 | 03 September 2020 |
| | | EP 3933973 A1 | 05 January 2022 |
| | | JP 7411966 B2 | 12 January 2024 |
| | | JP WO2020175488 A1 | 01 January 2022 |
| CN 110199427 A | 03 September 2019 | WO 2018128099 A1 | 12 July 2018 |
| | | US 2020006780 A1 | 02 January 2020 |
| | | US 11081701 B2 | 03 August 2021 |
| | | JP 2018113108 A | 19 July 2018 |
| | | JP 6860125 B2 | 14 April 2021 |
| | | CN 110199427 B | 28 June 2022 |
| CN 104681853 A | 03 June 2015 | CN 104681853 B | 01 March 2017 |
| CN 112786949 A | 11 May 2021 | WO 2021088718 A1 | 14 May 2021 |
| | | EP 3951977 A1 | 09 February 2022 |
| | | US 2022093921 A1 | 24 March 2022 |
| | | CN 112786949 B | 27 June 2022 |
| | | EP 3951977 B1 | 03 May 2023 |
| | | ES 2946079 T3 | 12 July 2023 |
| JP 2005135925 A | 26 May 2005 | JP 3987853 B2 | 10 October 2007 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 2023106397080